# EUROPEAN PATENT APPLICATION

(11) **EP 4 668 176 A1**
(43) Date of publication of application: **24.12.2025**
(21) Application number: 25154207.2
(22) Date of filing: 27.01.2025
(51) Int. Cl.: G06N 20/00, G06N 3/10, G06N 3/006, G06N 3/0475, G06N 3/0455, G06N 3/0985, G06N 5/022

(54) **LANGUAGE MODEL AND ONTOLOGY ASSISTED MACHINE LEARNING SERVICE**

(30) Priority: 17.06.2024 US 202463660793 P; 31.10.2024 US 202418934055
(71) Applicant: Palantir Technologies Inc., Denver, CO 80202 (US)
(72) Inventor: SCHRADER, Max-Philipp, Denver, 80202 (US); KRISHNAN, Sriram, Denver, 80202 (US); COATO, Riccardo, Denver, 80202 (US)
(74) Representative: Jolliffe, Jack Louis

(57) **Abstract**

Computer-implemented systems and methods including language models for explaining and resolving code errors. A computer-implemented method may include: receiving one or more user inputs identifying a data set and providing a first user request to perform a first task based on at least a portion of the data set, wherein the data set is defined by an ontology; using a large language model ("LLM") to identify a first machine learning ("ML") model type from a plurality of ML model types; using the LLM to identify a first portion of the data set to be used to perform the first task; using the LLM to generate a first ML model training configuration; and executing the first ML model training configuration to train a first custom ML model, of the first ML model type, to perform the first task.

## Description

### CROSS-REFERENCE TO RELATED APPLICATIONS

This application claims benefit of U.S. Provisional Patent Application No. 63/660793, filed June 17, 2024, and titled "LANGUAGE MODEL AND ONTOLOGY ASSISTED MACHINE LEARNING SERVICE." The entire disclosure of each of the above items is hereby made part of this specification as if set forth fully herein and incorporated by reference for all purposes, for all that it contains.

Any and all applications for which a foreign or domestic priority claim is identified in the Application Data Sheet as filed with the present application are hereby incorporated by reference under 37 CFR 1.57 for all purposes and for all that they contain.

### TECHNICAL FIELD

The present disclosure relates to systems and techniques for utilizing computer-based models. More specifically, some embodiments of the present disclosure relate to computerized systems and techniques for using large language models and an ontology to generate and/or train machine learning models.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations utilizing one or more computer-based models. For example, language models can be utilized to provide and/or predict a probability distribution over sequences of words. A computer-based ontology may be used to model a view of, or provide a template for, what objects exist in the world, what their properties are, and how they are related to each other.

### SUMMARY

The systems, methods, and devices described herein each have several aspects, no single one of which is solely responsible for its desirable attributes. Without limiting the scope of this disclosure, several non-limiting features will now be described briefly.

Computer-based models can be used by users to solve various problems. For example, machine learning ("MI,") models can be useful for data processing, including receiving natural language prompts and providing responses based on data on which the ML model is trained. However, training or applying a trained ML model often entails sophisticated processes (e.g., identifying relevant training data, fine-tuning various settings, parameters, or configurations) and may present several technical challenges. More specifically, current processes of utilizing ML models usually include performing various complex, unintegrated, or time-consuming steps. As such, ML models may become less accessible to certain users.

The present disclosure describes systems and methods (generally collectively referred to herein as "an automated model training system" or simply a "system") that can, according to various implementations, advantageously overcome various of the technical challenges mentioned above, among other technical challenges. For example, various implementations of the systems and methods of the present disclosure can employ an ontology and one or more Large Language Models ("LLMs") for automatically selecting and/or preparing training data, choosing machine learning (ML) model types, setting up parameters and configurations for training customized ML models of chosen ML model types, and deploying customized ML models to perform specific tasks requested by users. Advantageously, the one or more LLMs may be used in combination with an ontology to derive user intent based on the ontology. As such, the one or more LLMs may effectively obtain relevant data and ML model types for training ML models customized to specific tasks intended to be performed by users. Additionally and/or optionally, an AI agent (or simply an "agent") may be advantageously employed by the system to supervise LLM inputs, outputs, and analysis process to avoid errors or unintended results, enable reuse of trained ML models, and/or select the best trained ML model for performing specific tasks, thereby achieving improved automated model training and model performance.

Various embodiments of the present disclosure provide improvements to various technologies and technological fields. For example, as described above, the system may advantageously employ an ontology and one or more LLMs for selecting and/or preparing training data, choosing machine learning (ML) model types, setting up parameters and configurations for training customized ML models of chosen ML model types, and deploying customized ML models to perform specific tasks requested by users. Other technical benefits provided by various embodiments of the present disclosure include, for example, utilizing agent(s) enabling LLM(s) to supervise LLM inputs, outputs, and analysis process for achieving improved automated model training and model performance.

Additionally, various implementations of the present disclosure are inextricably tied to computer technology. In particular, various implementations rely on detection of user inputs via graphical user interfaces, calculation of updates to displayed electronic data based on those user inputs, automatic processing of related electronic data, and application of language models and/or other artificial intelligence. Such features and others (e.g., processing and analysis of large amounts of electronic data) are intimately tied to, and enabled by, computer technology, and would not exist except for computer technology. For example, the interactions with displayed data described below in reference to various implementations cannot reasonably be performed by humans alone, without the computer technology upon which they are implemented. Further, the implementation of the various implementations of the present disclosure via computer technology enables many of the advantages described herein.

According to various implementations, large amounts of data are automatically and dynamically calculated interactively in response to user inputs, and the calculated data is efficiently and compactly presented to a user by the system. Thus, in some implementations, the user interfaces described herein are more efficient as compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interface via the inputs described herein may provide an optimized display of, and interaction with, models and model-related data, and may enable a user to more quickly and accurately access, navigate, assess, and digest the model-related data than previous systems.

Further, the interactive and dynamic user interfaces described herein are enabled by innovations in efficient interactions between the user interfaces and underlying systems and components. For example, disclosed herein are improved methods that utilize an ontology and one or more LLMs for selecting and/or preparing training data, choosing machine learning (ML) model types, setting up parameters and configurations for training customized ML models of chosen ML model types. Advantageously, the one or more LLMs may be used in combination with the ontology to derive user intent based on the ontology. As such, the one or more LLMs may effectively obtain relevant data and ML model types for training ML models customized to specific tasks intended to be performed by users. According to various implementations, the system (and related processes, functionality, and interactive graphical user interfaces) can advantageously employ one or more agents for deploying customized ML models to perform specific tasks requested by users. The one or more agents may supervise LLM inputs, outputs, and analysis process to avoid errors or unintended results, enable reuse of trained ML models, and/or select the best trained ML model for performing specific tasks, thereby achieving improved automated model training and model performance.

Thus, various implementations of the present disclosure can provide improvements to various technologies and technological fields, and practical applications of various technological features and advancements. For example, as described above, existing computer-based model management and integration technology is limited in various ways, and various implementations of the disclosure provide significant technical improvements over such technology. Additionally, various implementations of the present disclosure are inextricably tied to computer technology. In particular, various implementations rely on operation of technical computer systems and electronic data stores, automatic processing of electronic data, and the like. Such features and others (e.g., automatically generating machine learning models to fulfill specific user requests, processing and analysis of large amounts of electronic data, management of data migrations and integrations, and/or the like) are intimately tied to, and enabled by, computer technology, and would not exist except for computer technology. For example, the interactions with, and management of, computer-based models described below in reference to various implementations cannot reasonably be performed by humans alone, without the computer technology upon which they are implemented. Further, the implementation of the various implementations of the present disclosure via computer technology enables many of the advantages described herein, including more efficient management of various types of electronic data (including computer-based models).

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise one or more computer-readable storage mediums having program instructions embodied therewith, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums are disclosed, wherein the computer-readable storage medium(s) have program instructions embodied therewith, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1 is a block diagram illustrating an example automated model training system in an example computing environment, according to various implementations of the present disclosure;
FIG. 2 shows an example block diagram of example aspects of the automated model training system, according to various embodiments of the present disclosure;
FIG. 3 illustrates an object-centric conceptual data model, according to various embodiments of the present disclosure;
FIG. 4 is a block diagram illustrating an example ML model data object, according to various embodiments of the present disclosure;
FIG. 5 is a flowchart illustrating an example routine for training a custom ML model using one or more LLMs and an ontology for performing a task, according to various embodiments of the present disclosure;
FIG. 6 is a flowchart illustrating an example routine for using a LLM to identify a ML model type for training a custom ML model of the ML model type, according to various implementations of the present disclosure;
FIG. 7 is a flowchart illustrating an example routine for using a LLM to identify a portion of a data set to be used to perform a task, according to various implementations of the present disclosure;
FIG. 8 is a flowchart illustrating an example routine for using a LLM to generate a ML model training configuration, according to various implementations of the present disclosure;
FIG. 9 shows an example interactive graphical user interface associated with the automated model training system, according to various implementations of the present disclosure;
FIG. 10 shows an example prompt generated by the automated model training system for an LLM to generate a ML model training configuration, according to various implementations of the present disclosure;
FIG. 11 shows another example interactive graphical user associated with the automated model training system, according to various implementations of the present disclosure; and
FIG. 12 is a block diagram of an example computer system consistent with various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

### Overview

As mentioned above, computer-based models can be used by users to solve various problems. For example, machine learning ("MI,") models can be useful for data processing, including receiving natural language prompts and providing responses based on data on which the ML model is trained. However, training or applying a trained ML model often entails sophisticated processes (e.g., identifying relevant training data, fine-tuning various settings, parameters, or configurations) and may present several technical challenges. More specifically, current processes of utilizing ML models usually include performing various complex, unintegrated, or time-consuming steps, such as identifying and preparing adequate training data, choosing appropriate ML model types for training, and deploying or managing trained models based on user demands. As such, ML models may become less accessible to certain users.

As also noted above, the present disclosure describes systems and methods (generally collectively referred to herein as "an automated model training system" or simply a "system") that can, according to various implementations, advantageously overcome various of the technical challenges mentioned above, among other technical challenges. For example, various implementations of the systems and methods of the present disclosure can employ an ontology and one or more Large Language Models ("LLMs") for automatically selecting and/or preparing training data, choosing machine learning (ML) model types, setting up parameters and configurations for training customized ML models of chosen ML model types, and deploying customized ML models to perform specific tasks requested by users. Advantageously, the one or more LLMs may be used in combination with an ontology to derive user intent based on the ontology. As such, the one or more LLMs may effectively obtain relevant data and ML model types for training ML models customized to specific tasks intended to be performed by users. Additionally and/or optionally, an AI agent (or simply an "agent") may be advantageously employed by the system to supervise LLM inputs, outputs, and analysis process to avoid errors or unintended results, enable reuse of trained ML models, and/or select the best trained ML model for performing specific tasks, thereby achieving improved automated model training and model performance.

More specifically, the system may receive (e.g., via a user interface) one or more user inputs that identify a data set and provide a user request to perform a task (e.g., generate a forecast chart using historical data) based on at least a portion of the data set, where the data set may be defined by an ontology associated with the system. The system may use a LLM to identify, based at least on the user request and the ontology, a ML model type from a plurality of ML model types. The system may also use the LLM to identify, based at least on the user request, the ontology, and the ML model type, a portion of the data set that is to be used to perform the task. The system may further use the LLM to generate, based at least on the user request, the portion of the data set, and the ML model type, a ML model training configuration. The system may then execute the ML model training configuration to train a custom ML model of the ML model type to perform the task. Additionally and/or optionally, the system may execute the custom ML model to generate a processing result to fulfill the user request. Based on the processing result, the system may generate a visual representation of the processing result, and provide the visual representation to a user via the user interface.

To achieve better performance, and correct and/or avoid errors, the system may employ one or more agents to perform and/or supervise at least some of the above steps. For example, an agent may cause a ML model training tool associated with the system to execute the ML model training configuration to train the custom ML model. The agent may receive the one or more user inputs identifying the data set and providing the user request. The agent may use the LLM to identify the ML model type, identify the portion of the data set to be used to perform the task, and/or generate the ML model training configuration.

### Example ML Model Training Preparation Features

As noted above, the system may receive via a user interface one or more user inputs identifying a data set and providing a user request to perform a task based on the data set. The data set may be identified by the one or more user inputs based on a user's manipulation of the user interface (e.g., dropdowns on a graphical user interface). The data set may include any type of electronic data, such as text, files, documents, books, manuals, time series data, emails, images, audio, video, databases, metadata, positional data (e.g., geo-coordinates), sensor data, web pages, and/or any combination of the foregoing and/or the like. The data set may be compiled by individual users, public, and/or private entities, and may contain any type of information, such as distribution statistics, regulatory information, inventory data, supply chain management information, statistical data, and/or any combination of the foregoing. The data set can be obtained from a data source (e.g., a third-party or data source external to the system) and stored in a database of the system using, based on, and/or defined by an ontology, which may define document/data types and associated properties, and relationships among documents/data types, properties, and/or the like. The ontology may be used and/or defined by a person, an entity, or an organization to model a view of, or provide a template for, what objects exist in the world, what their properties are, and how they are related to each other.

The user request may be any natural language request for some data analysis or tasks (e.g., prediction, image recognition, audio processing, natural language understanding, recommendations, classifications, segmentation, transcription, estimation) to be performed, and/or problems to be solved by the system based on the data set that is identified by the user. The user request may include some natural language instructions, queries, and/or indications of what the task to be performed is or how the request is to be fulfilled by the system. The user request may include a natural language word, a natural language phrase, a natural language sentence, or a natural language paragraph, and may be provided to the system via the user interface (e.g., a dialog box on the graphical user interface).

In some implementations, the user request may be brief, under-specified, or unclear in specifying the task or stating how the task is to be performed. For example, the user request may simply provide "create a forecast for the next 3 months" or "find out average housing prices in the United States." As discussed in further detail below, by utilizing one or more LLMs and the ontology, the system may nevertheless more accurately infer user intent based on the user request to generate a ML model training configuration for training a custom ML model to perform the task with enhanced performance.

For example, the system (e.g., an agent of the system) may use a LLM to identify, based at least on the user request and the ontology, a ML model type. More specifically, based on the user request and the ontology, the system may generate a first prompt (e.g., a text file) for the LLM. The first prompt may include or otherwise specify the user request and information related to ML model type identification, such as ML model types (e.g., prophetic, classifier, segmentation, estimation models) available or known to the system, definitions and/or formats of model input(s) associated with each of the ML model types, definitions and/or formats of model output(s) associated with each of the ML model types, or the like. The first prompt may further identify the ontology to the LLM, and include instructions to the LLM to analyze, reason, or interpret the user request based on the ontology for identifying the ML model type that is suitable for fulfilling the user request. In response to the first prompt, the LLM may generate an output that identifies the ML model type. For example, the LLM may analyze the user request (e.g., "create a forecast for the next 3 months") based on the ontology to generate an output identifying a "prophetic" model type through at least interpreting the word "forecast."

The system may use a LLM to identify, based at least on the user request, the ontology, and the ML model type, a portion of the data set to be used to perform the task. More specifically, based on the user request, the ontology, and the ML model type, the system may generate a second prompt for the LLM. The second prompt may instruct the LLM to identify, based on the user request, the ontology, and the ML model type, the portion of the data set that is relevant to perform the task. The second prompt may further include information related to training data identification, such as metadata associated with the ML model type, descriptive information about inputs and outputs of the ML model type, or the like. In response to the second prompt, the LLM may generate an output that identifies the portion of the data set that is relevant to the user request and/or can be used to train a custom ML model for performing the task.

The data set may correspond to a large corpus of documents and/or tables and may include parts, pages, portions, or entries that may be irrelevant or not useful for performing the task. For example, by analyzing the phrase "next 3 months" within the user request (e.g., "create a forecast for the next 3 months") and the data set (e.g., historical statistics of demand for a material in certain geometric locations) defined by the ontology, the LLM may identify a portion of the data set that includes time-series data and locational information that can be utilized to train a custom ML model for creating the forecast while exclude remaining portions (e.g., footnotes, index, table of contents, or the like) of the data set to be used for further processing. In some implementations, the LLM may execute a search (e.g., a similarity search), based on the user request, the ontology, and/or the ML model type, on the data set to identify the portion of the data set.

The system may further use a LLM to generate, based at least on the user request, the portion of the data set, and the ML model type, a ML model training configuration. More specifically, based on the user request, the portion of the data set, and the ML model type, the system may generate a third prompt for the LLM. The third prompt may include or otherwise specify the user request, the portion of the data set, and the ML model type, and may instruct the LLM to generate the ML model training configuration for training a custom ML model to perform the task.

In some implementations, the third prompt may instruct the LLM to generate output conforming to particular formats (e.g., JavaScript Object Notation "JSON") and provide example ML model training configuration to the LLM to avoid undesired outputs from the LLM. The third prompt may further include definitions or explanations of terminologies defined in the ontology and/or related to the user request or the portion of the data set to assist the LLM to generate the ML model training configuration. In response to the third prompt, the LLM may generate an output comprising the ML model training configuration. The ML model training configuration may include values, thresholds, parameters, settings, or other information to setup and/or enable training a custom ML model of the ML model type using the portion of the data set as training data.

### Example Features Related to Training and Executing ML Model

The system may then execute the ML model training configuration (e.g., using a ML model training tool of a model training service) to train a custom ML model of the ML model type to perform the task. The system may further run or execute (e.g., using a ML model running tool of a model training service) the custom ML model to generate a processing result to fulfill the user request. The system may generate a visual representation of the processing result, and provide the visual representation to a user via a user interface. In some implementations, by utilizing one or more LLMs and an ontology for analyzing a user request, the system may generate the visual representation that is consistent with the user request or intent of a user. For example, based on user inputs identifying a data set that relates to housing prices in a geographical region and providing a user request that states "create a forecast for the next 6 months," the system may generate the visual representation including a chart or a drawing that plots or shows housing prices in the geographical region for each of the next 6 months. The chart may also include housing prices in the geographical region in the past such that the user may observe a trend through the visual representation.

### Example Features Related to LLM Output Validation

The system may enable validations on outputs from one or more LLMs employed by the system. More specifically, the system may automatically verify that a portion of a data set identified by a LLM is relevant to perform the task requested by a user or satisfies one or more criteria. For example, based on a user request, the system may infer a user's desired output format or type (e.g., a string, text, binary, floating point, character, Boolean, timestamp, date), and evaluate if the portion of the data set identified by the LLM includes the user's desired output format or type. As another example, the system may check if the portion of the data set identified by the LLM is consistent or coherent with units of measurement specified by a user request and/or an ontology. Additionally and/or alternatively, the system may provide the portion of the data set identified by the LLM to a user through a user interface to allow the user to confirm if the portion of the data set meets expectation.

When the system validates outputs from the one or more LLMs, the system may proceed to next stages of operations. For example, in response to automatically verifying that the portion of the data set is relevant to perform the task request by the user, the system may use a LLM to generate a ML model training configuration based at least on the portion of the data set. But when the system determines that the portion of the data set identified by the LLM does not satisfy the one or more criteria, the system may automatically update the portion of the data set for generating the ML model training configuration. For example, the system may automatically convert the portion of the data set to a user's desired output format.

Alternatively, the system may cause the LLM to identify a different portion of the data set, and instruct the LLM to avoid identifying the portion of the data that does not satisfy the one or more criteria. In some implementations, the portion of the data set that does not satisfy the one or more criteria may be identified by the LLM in a previous iteration and may result in errors when used for training a custom ML model. By providing LLM with instructions and context for generating outputs, the LLM may advantageously generate outputs that more likely to meet user expectations.

### Example Features Related to ML Model Reuse

The system may employ database(s) that uses ontology and data objects to store, represent and/or organize data utilized by the system. The system may capture and synchronize data or information associated with a custom ML model (e.g., a user request that is fulfilled by using the custom ML model, processing results provided to a user, timestamps of events of a user session, user profile information, or the like) into an ontology associated with a database. As such, data utilized by the system may be organized and linked to relevant context for providing a comprehensive knowledge base for auditing, reference, and analysis.

In some implementations, a body of data may be conceptually structured according to an object-centric data model represented by the ontology. The ontology may include stored information providing a data model for storage of data in the database. The ontology may be defined by one or more object types, which may each be associated with one or more property types. At the highest level of abstraction, data object may be a container for information representing things in the world. For example, data object can represent a ML model, a ML model training configuration, a document, a table, or unstructured data such as an e-mail message, a news report, or a written paper or article. Additionally, data object can represent an entity such as a person, a place, an organization, a market instrument, or other noun. Data obj ect can further represent an event that happens at a point in time or for a duration. Each data object may be associated with a unique identifier that uniquely identifies the data object within the database of the system.

More specifically, the system may utilize a "ML model data object" to store information and/or data associated with a custom ML model that is trained to fulfill a user request for various purposes. The ML model data object may be linked to data object(s) that represent the user request, a session of performing a task to fulfill the user request, a portion of a data set identified by a LLM, a ML model type, a model training configuration used to train the custom ML model, a timestamp indicating when the custom ML model is trained, or other information associated with the custom ML model. Additionally and/or optionally, the ML model data object may include or be linked to the custom ML model that may be stored as a data structure including parameters, nodes, layers, or other information related to the custom ML model). The system may utilize the ML model data object and/or additional data objects to automatically generate processing results, or for other purposes.

For example, the system may leverage the ML model data obj ect for reusing the custom ML model without going through again the processes related to identifying relevant data for training the custom ML model. More specifically, the system may determine that the custom ML model can be used to fulfill a later received user request based at least on the later received user request, the ML model data object, and the ontology when the later received user request is similar to a previously received user request (e.g., both requests are about predicting supply of a material except for different time periods in the future). In response to determining that the custom ML model can be used to fulfill the later received user request, the system may execute the custom ML model to generate another processing result to fulfill the later received user request. Advantageously, the capability of reusing trained model that is adequate in fulfill user request received in the future improves system efficiency.

### Example Features Related to ML Model Selection

The system may train more than one ML models, and select the best ML model for performing a specific task specified or inferred from a user request. For example, the system may use a LLM to identify a first ML model type based on a user request and an ontology, use the LLM to generate a first ML model training configuration, and execute the first ML model training configuration to train a first custom ML model to perform the specific task. The system may further use the LLM to identify a second ML model type based on the user request, the ontology, and an instruction to avoid identifying the first ML model type. Based at least on the second ML model type, the system may generate a second ML model training configuration to train a second custom ML model to perform the specific task.

The system may then determine whether the first custom ML model is superior to perform the specific task as compared to the second custom ML model. The determination may be based on various metrics, such as accuracy of a trained model compared with golden processing results, latency associated with a trained model, resources or memory utilized while executing a trained model, or other performance metrics. Additionally and/or alternatively, the determination may be based on physical characteristics of custom ML models, such as number of layers, number of nodes, memory capacity used to store a custom ML model itself, or the like. Responsive to determining that the first custom ML model is superior to perform the specific task as compared to the second custom ML model, the system may select and/or store (e.g., as a ML model data object in a database) the first custom ML model to perform the specific task.

### Example Features Related to User Interfaces

The system may further allow user to interact with the system through a user interface (e.g., a graphical user interface ("GUI") or other types of user interfaces), and receive a user request for performing a task. In some implementations, the system may provide through the user interface a ML model type identified by a LLM, a portion of a data set relevant to the user request for a user to preview such that the user may approve or have a better understanding about the intermediary results generated by the system. Additionally and/or optionally, the system may provide a graphical representation of the output from the LLM and/or processing results generated by custom MLs model through the user interface to enhance user experience. Additionally and optionally, a user may configure the system and/or the LLM through manipulating the user interface.

### Example Features Related to Agent Functionalities

The system may employ one or more agents to supervise, manage, and/or control some or all of the operations discussed above, such as operations related to using one or more LLMs to generate ML model training configuration, using tools to train and execute ML models, validating outputs from one or more LLMs, reusing a custom ML model, selecting the best custom ML model for performing a specific task, and using a visualization tool to provide a processing result of a custom ML model to a user through a user interface.

An agent can refer to a decision-making entity that is designed to be specialized at solving a class of problems or performing certain operations. The class of problems that an agent used by the system can solve can include simple (e.g., sending a single request to a LLM) or more complex ones (e.g., generating and using a custom ML model to fulfill a user request, chaining a set of tools behind each other in a dynamic fashion to solve a complex problem). The operations performed by an agent can include generating prompts for LLMs based on user inputs and an ontology, causing a ML model execution tool to execute a custom ML model, causing a visualization tool to provide a visual representation of a processing result through a user interface.

An agent can be associated with a specific ontology, one or more LLMs, one or more tools, an agent storage for performing various functionalities. An agent storage may be utilized by an agent to store data and/or information (e.g., ML model data objects, tools, messages, program code, data files, tables, or the like) for processing tasks.

### Further Example Information Related to Various Implementations

To facilitate an understanding of the systems and methods discussed herein, several terms are described below and herein. These terms, as well as other terms used herein, should be construed to include the provided descriptions, the ordinary and customary meanings of the terms, and/or any other implied meaning for the respective terms, wherein such construction is consistent with context of the term. Thus, the descriptions below and herein do not limit the meaning of these terms, but only provide example descriptions.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like. A "nondeterministic model" as used in the present disclosure, is any model in which the output of the model is not determined solely based on an input to the model. Examples of nondeterministic models include language models such as LLMs, ML models, and the like.

A Language Model is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. An LLM may comprise a NN trained using self-supervised learning. An LLM may be of any type, including a Question Answer ("QA") LLM that may be optimized for generating answers from a context, a multimodal LLM/model, and/or the like. An LLM (and/or other models of the present disclosure), may include, for example, attention-based and/or transformer architecture or functionality. LLMs can be useful for natural language processing, including receiving natural language prompts and providing natural language responses based on the text on which the model is trained. LLMs may not be data security- or data permissions-aware, however, because they generally do not retain permissions information associated with the text upon which they are trained. Thus, responses provided by LLMs are typically not limited to any particular permissions-based portion of the model.

While certain aspects and implementations are discussed herein with reference to use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LLaMA (Large Language Model Meta AI), and BigScience Large Open-science Open-access Multilingual Language Model (BLOOM).

A Prompt (or "Natural Language Prompt" or "Model Input") can be, for example, a term, phrase, question, and/or statement written in a human language (e.g., English, Chinese, Spanish, and/or the like), and/or other text string, that may serve as a starting point for a language model and/or other language processing. A prompt may include only a user input or may be generated based on a user input, such as by a prompt generation module (e.g., of a document search system) that supplements a user input with instructions, examples, and/or information that may improve the effectiveness (e.g., accuracy and/or relevance) of an output from the language model. A prompt may be provided to an LLM which the LLM can use to generate a response (or "model output").

A User Operation (or "User Input") can be any operations performed by one or more users to user interface(s) and/or other user input devices associated with a system (e.g., the data extraction system). User operation can include a request for task(s) to be performed, such as by using a machine learning model and/or an LLM, in whole or in part. User operation can include a request for data, such as data accessed and/or processed by one or more services. User operation can include one or more queries, one or more questions, one or more requests, or the like. User operation may include one or more natural language instructions for some data analysis (e.g., prediction, estimation, classification, or the like) to be performed. User operations can include, for example, select, drag, move, group, or the like, one or more interactive graphical representations for updating an ontology.

An Ontology can include stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types. An ontology may be used by an organization to model a view of, or provide a template for, what objects exist in the world, what their properties are, and how they are related to each other.

An Agent can refer to a decision making entity that is designed to be specialized at solving a class of problems. The class of problems that a particular agent can solve can include simple (e.g., sending a single request to a large language model (LLM) service) or more complex ones (e.g., chaining a set of tools behind each other in a dynamic fashion to solve a complex problem). In some implementations, an agent can be defined by a specific combination of building blocks including one or more of: (1) agent logic: a core programmatic definition on how this specific agent should interact with the available tools, configurations, and the user; (2) tools: a defined set of tools available for the specific agent; (3) guardrails: a core security mechanism to control the interaction of the agent with the system, such as permissions regarding ontology access; and (4) agent storage (herein also referred to as "agent memory"): a data store and/or memory space allowing an individual agent to keep track of relevant information (e.g., messages and accessories) during and across runs.

A Tool can refer to a specific capability that is available to an agent to solve a given problem. In its core, a tool may be mostly responsible to perform a deterministic action. A tool may allow an agent to interact with the operational system, an ontology, internal databases and system, and/or external systems. A tool can be any set of logic or rules that can be provided to an agent for the agent's use, such as to obtain additional information by generating a request for access to additional data via a plug-in. Thus, a tool can be used by the system (e.g., an agent) to train a custom ML model, run or execute the custom ML model, generate requests (that may be fulfilled by the system) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Example tools include machine learning (ML) model training tool, ML model running tool, ontology function tool, date/time tool, query objects tool, calculator tool, and apply action tool. Tools, or the set of logic they comprise for performing one or more operations, may be defined by a system, external database, ontology and/or a user.

A Data Object (or "Object" or "Data Object Instance") is a data container for information representing a specific thing in the world that has a number of definable properties. For example, a data object can represent a machine learning model. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The obj ect's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

A Data Store is any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, random-access memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A Database is any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like, for example.

### Example System and Related Computing Environment

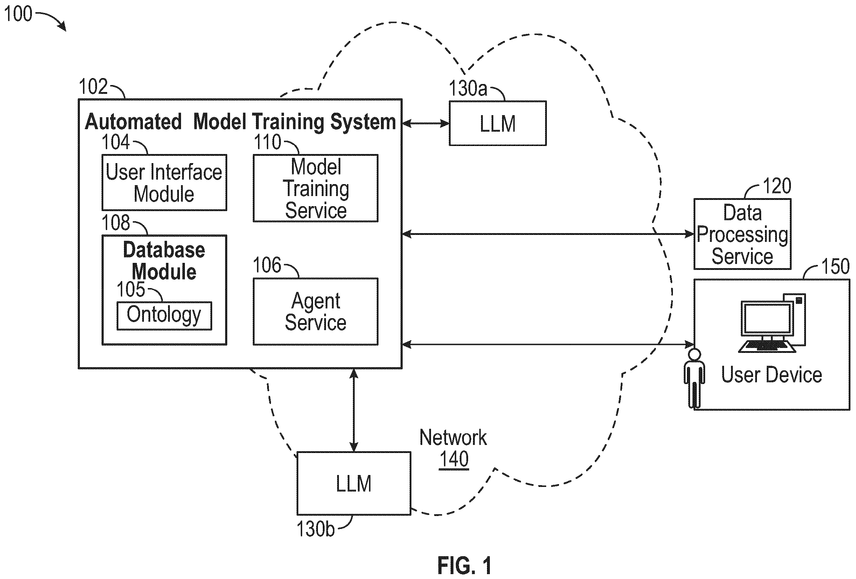

FIG. 1 illustrates an example computing environment 100 including an example automated model training system 102 in communication with various devices to respond to a user input or a triggering event, according to various implementations of the present disclosure. The example computing environment 100 includes the automated model training system 102, one or more LLMs (e.g., LLM 130a, and LLM 130b), a network 140, a data processing service 120, and a user device 150 (and/or user computing device). In the example of FIG. 1, the automated model training system 102 comprises various modules, including a user interface module 104, an agent service 106, a model training service 110, and a database module 108 that includes an ontology 105. In other embodiments, the automated model training system 102 may include fewer or additional components.

In the example of FIG. 1, the various devices are in communication via a network 140, which may include any combination of networks, such as one or more local area network (LAN), personal area network (PAN), wide area network (WAN), Global System for Mobile Communications (GSM) network, a Code Division Multiple Access (CDMA) network, a Long Term Evolution (LTE) network, the Internet, and/or any other communication network. The network 140 can use protocols and components for communicating via the Internet or any of the other aforementioned types of networks. For example, the protocols used by the network 140 may include Hypertext Transfer Protocol (HTTP), HTTP Secure (HTTPS), Message Queue Telemetry Transport (MQTT), Constrained Application Protocol (CoAP), and the like. In various implementations, modules of the illustrated components, such as the user interface module 104, the agent service 106, the database module 108, and the model training service 110 of the automated model training system 102, may communicate via an internal bus and/or via the network 140. Additionally, the automated model training system 102 may communicate with the one or more LLMs (e.g., the LLM 130a and the LLM 130b) and the data processing service 120 via the network 140 in the course of fulfilling an objective and/or a user input.

The data processing service 120 may include any quantity of services (or "plug-ins") and any available type of service. For example, the data processing service 120 may include one or more search services (e.g., a table search service, an object search service, a text search service, or any other appropriate search service), indexing services, services for formatting text or visual graphics, services for generating, creating, embedding and/or managing interactive objects in a graphical user interface, services for caching data, services for writing to databases, an ontology traversing service (e.g., for traversing the ontology 105 or performing search-arounds in the ontology 105 to surface linked objects or other data items) or any other services. In some implementations, the data processing service 120 may be a part of the automated model training system 102 (e.g., as part of a data processing service module of the automated model training system 102), in whole or in part.

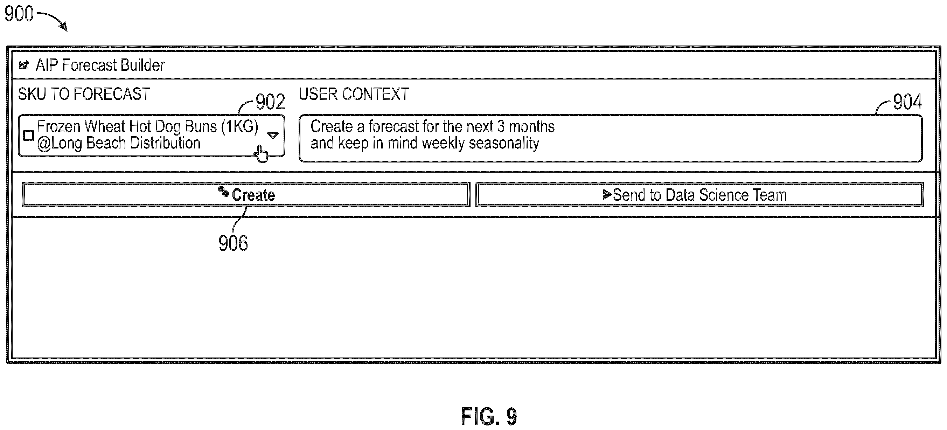

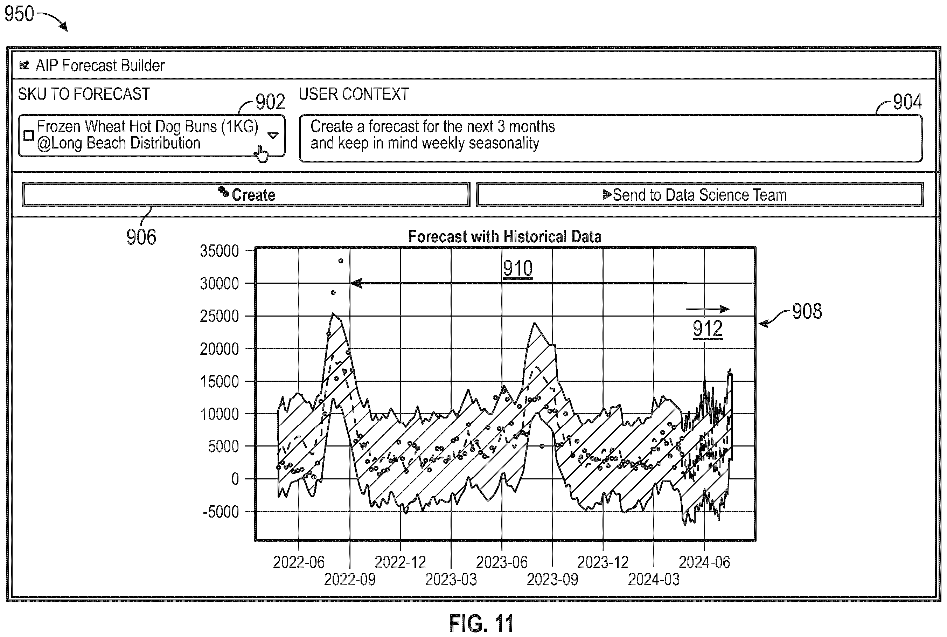

The user interface module 104 is configured to generate user interface data that may be rendered on a user device 150, such as to receive an initial user input, as well as later user input that may be used to initiate further data processing. In various implementations, the functionality discussed with reference to the user interface module 104, and/or any other user interface functionality discussed herein, may be performed by a device or service outside of the automated model training system 102 and/or the user interface module 104 may be outside the automated model training system 102. Example user interfaces are described in greater detail below with reference to FIGS. 9 and 11.

The database module 108 is configured to store data that may be accessed by the user device 150 and/or various aspects of the automated model training system 102, as described herein. For example, the database module 108 is configured to store data/information that may be utilized by the agent service 106, the model training service 110, and/or accessed or manipulated by the user device 150. The database module 108 of the automated model training system 102 may obtain and store data and/or information from the data processing service 120. Data that may be stored by the database module 108 may include any type of electronic data, such as error logs, code files, documents, text, data files, books, manuals, emails, images, audio, video, databases, metadata, positional data (e.g., geo-coordinates), sensor data, web pages, time series data, and/or any combination of the foregoing and/or the like. The database module 108 may store the data using the ontology 105, or based on the ontology 105, which may define data types and associated properties, and relationships among data types, properties, and/or the like. The ontology 105 may constitute a way to represent things in the world. The ontology 105 may be used by an organization to model a view on what objects exist in the world, what their properties are, and how they are related to each other. The ontology 105 may be user-defined, computer-defined, or some combination of the two. The ontology 105 may include hierarchical relationships among data object types.

The model training service 110 may send and receive data to/from user device(s) 150, the agent service 106, the data processing service 120, the LLM 130a, and/or the LLM 130b. For example, model training service 110 may connect to the data processing service 120 through an application programming interface ("API") and retrieve or submit data to/from the data processing service 120 through appropriate API calls. Similarly, model training service 110 may receive data from an API from user device(s) 150 through appropriate API calls. Additionally, model training service 110 can be utilized to train and/or execute custom ML models for fulfilling a user request from the user device 150 or various modeling objectives (e.g., enabling reuse of trained ML models, enabling selection of the best trained ML models for performing specific task, or the like).

As shown in FIG. 1, the automated model training system 102 may be capable of interfacing with multiple LLMs. This allows for experimentation, hot-swapping and/or adaptation to different models based on specific use cases or requirements, providing versatility and scalability to the system. In various implementations, the automated model training system 102 may interface with the LLM 130b and/or the LLM 130a in order to, for example, identify a ML model type, identify a portion of a data set stored in the database module 108, and/or generate a ML model training configuration to train a custom ML model for performing a task requested by the user device 150. Although FIG. 1 illustrates that the LLM 130a and the LLM 130b are external to the automated model training system 102, in various implementations the LLM 130a and/or the LLM 130b can be internal to the automated model training system 102.

In some implementations, the automated model training system 102 may employ the ontology 105 and at least one of the LLM 130b and the LLM 130a for automatically selecting and/or preparing training data, choosing machine learning (ML) model types, setting up parameters and configurations for training customized ML models of chosen ML model types, and deploying customized ML models to perform specific tasks requested by the user device 150. Advantageously, the LLM 130b and/or the LLM 130a may be used in combination with the ontology 105 to derive intent of the user device 150 based on the ontology 105. As such, the LLM 130b and/or the LLM 130a may effectively obtain relevant data and ML model types for training ML models customized to specific tasks intended to be performed by the user device 150.

For example, the automated model training system 102 may receive (e.g., via the user interface module 104) one or more user inputs from the user device 150 that identify a data set and provide a user request to perform a task (e.g., generate a forecast chart using historical data) based on at least a portion of the data set, where the data set may be defined by the ontology 105 and stored in the database module 108. The automated model training system 102 may use at least one of the LLM 130a and the LLM 130b to identify, based at least on the user request and the ontology 105, a ML model type from a plurality of ML model types. The automated model training system 102 may also use the LLM 130a and/or the LLM 130b to identify, based at least on the user request, the ontology 105, and the ML model type, a portion of the data set that is to be used to perform the task. The automated model training system 102 may further use the LLM 130a and/or the LLM 130b to generate, based at least on the user request, the portion of the data set, and the ML model type, a ML model training configuration. The automated model training system 102 may then execute the ML model training configuration to train a custom ML model of the ML model type to perform the task requested by the user device 150. Additionally and/or optionally, the automated model training system 102 may execute the custom ML model to generate a processing result to fulfill the user request from the user device 150. Based on the processing result, the automated model training system 102 may generate a visual representation of the processing result, and provide the visual representation to the user device 150 via the user interface module 104.

In the example of FIG. 1, the automated model training system 102 may additionally and/or optionally utilize the agent service 106 to perform and/or supervise at least some of the above steps. The agent service 106 may include one or more agents that may be utilized by the automated model training system 102 to solve various problems or process various user requests to perform tasks intended by the user device 150. In some implementations, agents in the agent service 106 may coordinate with each other to solve problems or process tasks, thereby increasing the efficiency and accuracy of the automated model training system 102 in processing user inputs from the user device 150. Agents employed by the agent service 106 may be configurable based on various settings or parameters. Additionally, configurations of agents can be version controlled by the agent service 106. The agent service 106 may generate and maintain a log to record events, timelines, received inputs, or generated outputs while agents process tasks or solve problems received from the user device 150. The agent service 106 may provide storage (e.g., agent storage) for agent(s) to store tools, processing results (e.g., outputs from the LLM 130a and/or 130b such as a ML model type and a ML model training configuration for training a custom ML model to perform tasks requested by the user device 150), and/or other information.

For example, the one or more agents of the agent service 106 may supervise LLM 130a/130b inputs, outputs, and analysis process to avoid errors or unintended results, enable reuse of trained ML models, and/or select the best trained ML model for performing specific tasks, thereby achieving improved automated model training and model performance associated with the automated model training system 102. More specifically, the one or more agents of the agent service 106 may cause the model training service 110 to execute the ML model training configuration to train a custom ML model. The one or more agents of the agent service 106 may receive from the user device 150 one or more user inputs identifying the data set and providing the user request. The one or more agents of the agent service 106 may use the LLM 130a and/or the LLM 130b to identify the ML model type, identify the portion of the data set to be used to perform the task, and/or generate the ML model training configuration.

### Example System and Related Modules

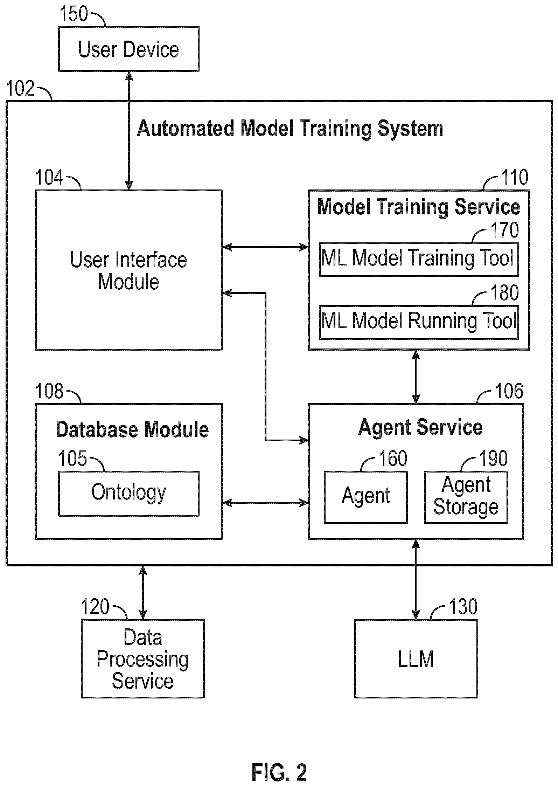

FIG. 2 depicts example connections and/or communications between various modules of the automated model training system 102, including the user interface module 104, the agent service 106, the database module 108, and the model training service 110. In other embodiments, the automated model training system 102 may include fewer or additional connections/communications. The indicated connections and/or data flows of FIG. 2 are exemplary of only certain processes performed by the automated model training system 102 and is not meant to include all possible blocks and participants. As shown in FIG. 2, the agent service 106 includes at least an agent 160 and an agent storage 190 that can be utilized by the agent 160 to store data. The model training service 110 includes at least a ML model training tool 170 and a ML model running tool 180.

As described above, the automated model training system 102 may receive via the user interface module 104 one or more user inputs identifying a data set and providing a user request to perform a task based on the data set. The data set may be identified by the one or more user inputs based on manipulation of the user interface module 104 (e.g., dropdowns on a graphical user interface) by a user of the user device 150. The data set may include any type of electronic data, such as text, files, documents, books, manuals, time series data, emails, images, audio, video, databases, metadata, positional data (e.g., geo-coordinates), sensor data, web pages, and/or any combination of the foregoing and/or the like. The data set may be compiled by individual users, public, and/or private entities, and may contain any type of information, such as distribution statistics, regulatory information, inventory data, supply chain management information, statistical data, and/or any combination of the foregoing. The data set can be obtained from a data source (e.g., a third-party or data source external to the automated model training system 102) such as the data processing service 120 and stored in the database module 108 of the automated model training system 102 using, based on, and/or defined by the ontology 105, which may define document/data types and associated properties, and relationships among documents/data types, properties, and/or the like. As noted above, the ontology 105 may be used and/or defined by a person, an entity, or an organization to model a view of, or provide a template for, what objects exist in the world, what their properties are, and how they are related to each other.

The user request received from the user device 150 may be any natural language request for some data analysis or tasks (e.g., prediction, image recognition, audio processing, natural language understanding, recommendations, classifications, segmentation, transcription, estimation) to be performed, and/or problems to be solved by the system based on the data set that is identified by the user device 150. The user request may include some natural language instructions, queries, and/or indications of what the task to be performed is or how the request is to be fulfilled by the automated model training system 102. The user request may include a natural language word, a natural language phrase, a natural language sentence, or a natural language paragraph, and may be provided to the automated model training system 102 via the user interface module 104 (e.g., a dialog box on the graphical user interface).

As noted above, the user request from the user device 150 may be brief, under-specified, or unclear in specifying the task or stating how the task is to be performed. For example, the user request may simply provide "create a forecast for the next 3 months" or "find out average housing prices in the United States." By utilizing at least the LLM 130 and the ontology 105, the automated model training system 102 may nevertheless more accurately infer user intent based on the user request to generate a ML model training configuration for training a custom ML model to perform the task with enhanced performance.

In some implementations, the agent 160 may use the LLM 130 to identify, based at least on the user request and the ontology 105, a ML model type. More specifically, based on the user request and the ontology 105, the agent 160 may generate a first prompt (e.g., a text file) for the LLM 130. The first prompt may include or otherwise specify the user request and information related to ML model type identification, such as ML model types (e.g., prophetic model type, classifier model type, segmentation model type, estimation model type, and/or the like) available or known to the automated model training system 102, definitions and/or formats of model input(s) associated with each of the ML model types, definitions and/or formats of model output(s) associated with each of the ML model types, or the like. The first prompt may further identify the ontology 105 to the LLM 130, and include instructions to the LLM 130 to analyze, reason, or interpret the user request based on the ontology 105 for identifying the ML model type that is suitable for fulfilling the user request. The first prompt may also include information about the data set. The information about the data set may be at least in part specified, defined, and/or included in the ontology 105. The information about the data set defined by the ontology 105 can include object types, data fields, relationships among data fields, data structures (e.g., columns and rows of data tables), naming of object types and data fields, properties of data fields (e.g., time-series data, locational data, or the like) associated with the data set, or other information that may be helpful for the LLM 130 to identify the ML model type. By including at least the user request and the information about the data set defined by the ontology 105, the first prompt may enable the LLM 130 to more effectively identify the ML model type suitable for training a custom ML model to perform the task. For example, based on the user request and information about ML model types available to the automated model training system 102, the LLM 130 may identify a couple of ML model types that may be useful to perform the task. The LLM 130 may further reason, analyze, and/or refer to the information about the data set defined by the ontology 105 to advantageously identify or select the ML model type suitable to perform the task. More specifically, the information about the data set defined by the ontology 105 may specify formats of data in the data set. Based on the formats of the data, the LLM 130 may determine that certain ML model type is not suitable for training a custom ML model because of incompatible data formats used by the certain ML model type and the data set.

Additionally and/or optionally, the first prompt may include instructions to specifically instruct the LLM 130 to identify the ML model type. The first prompt may instruct the LLM 130 on what should be included in its output and/or what should not be included in its output. In response to the first prompt, the LLM 130 may generate an output that identifies the ML model type. For example, the LLM 130 may analyze the user request (e.g., "create a forecast for the next 3 months") based on the information about the data set defined by the ontology 105 to generate an output identifying a "prophetic" model type through at least interpreting the word "forecast." The agent 160 may parse and/or store the output from the LLM 130 to the agent storage 190.

The agent 160 may use the LLM 130 to identify, based at least on the user request, the ontology 105, and the ML model type, a portion of the data set to be used to perform the task. More specifically, based on the user request, the ontology 105, and the ML model type, the agent 160 may generate a second prompt for the LLM 130. The second prompt may instruct the LLM 130 to identify, based on the user request, the ontology 105, and the ML model type, the portion of the data set that is relevant to perform the task. The second prompt may further include information related to training data identification, such as information about the data set, metadata associated with the ML model type, descriptive information about inputs and outputs of the ML model type, or the like. As noted above, the information about the data set may be at least in part specified, defined, and/or included in the ontology 105. More specifically, the information about the data set that may be defined by the ontology 105 can include object types, data fields, relationships among data fields, data structures (e.g., columns and rows of data tables), naming of object types and data fields, properties of data fields (e.g., time-series data, locational data, or the like) associated with the data set, or other information that may be useful for the LLM 130 to analyze and/or search the data set for identifying the portion of the data set relevant to perform the task. By including at least the user request, the ML model type, and the information about the data set defined by the ontology 105, the second prompt may enable the LLM 130 to more effectively identify the portion of the data set that is relevant to perform the task. For example, based on the second prompt, the LLM 130 may analyze the user request to derive an intent (e.g., making a prediction, estimation, or a classification) of the user device 150. The LLM 130 may analyze the ML model type and information related to the ML model type to determine properties, characteristics, or attributes of data that would be useful to train a custom ML model of the ML model type. In view of the analyses on the user request and the ML model type, the LLM 130 may reason, analyze, and/or refer to the information (e.g., properties and/or relationships of data fields) about the data set defined by the ontology 105 to advantageously pinpoint or identify the portion of the data set that is relevant to perform the task. For example, the analyses on the user request and the ML model type may indicate to the LLM 130 that time-series data should be used to train a custom ML model of the ML model type. The information about the data set defined by the ontology 105 may indicate to the LLM 130 the portion of the data set that includes the time-series data.

Additionally and/or optionally, the second prompt may include instructions to specifically instruct the LLM 130 to identify the portion of the data set that is relevant to perform the task. The second prompt may further instruct the LLM 130 on what should be included in its output and/or what should not be included in its output. In response to the second prompt, the LLM 130 may generate an output that identifies the portion of the data set that is relevant to the user request and/or can be used to train a custom ML model for performing the task.

In some implementations, the data set may correspond to a large corpus of documents and/or tables and may include parts, pages, portions, or entries that may be irrelevant or not useful for performing the task. For example, by analyzing the phrase "next 3 months" within the user request (e.g., "create a forecast for the next 3 months") received from the user device 150 and the data set (e.g., historical statistics of demand for a material in certain geometric locations) defined by the ontology 105, the LLM 130 may identify a portion of the data set that includes time-series data and locational information that can be utilized to train a custom ML model for creating the forecast while exclude remaining portions (e.g., footnotes, index, table of contents, or the like) of the data set to be used for further processing. In some implementations, the LLM 130 may execute a search (e.g., a similarity search), based on the user request, the ontology 105, and/or the ML model type, on the data set to identify the portion of the data set.

The agent 160 may further use the LLM 130 to generate, based at least on the user request, the portion of the data set, and the ML model type, a ML model training configuration. More specifically, based on the user request, the portion of the data set, and the ML model type, the agent 160 may generate a third prompt for the LLM 130. The third prompt may include or otherwise specify the user request, the portion of the data set, and the ML model type, and may instruct the LLM 130 to generate the ML model training configuration for training a custom ML model to perform the task.

The third prompt may instruct the LLM 130 to generate output conforming to particular formats (e.g., JavaScript Object Notation "JSON") and provide example ML model training configuration to the LLM 130 to avoid undesired outputs from the LLM 130. The third prompt may further include definitions or explanations of terminologies defined in the ontology 105 and/or related to the user request or the portion of the data set to assist the LLM 130 to generate the ML model training configuration. In response to the third prompt, the LLM 130 may generate an output comprising the ML model training configuration. The ML model training configuration may include values, thresholds, parameters, settings, or other information to setup and/or enable training a custom ML model of the ML model type using the portion of the data set as training data.

The agent 160 may then execute the ML model training configuration to train a custom ML model of the ML model type to perform the task. For example, the agent 160 may use the ML model training tool 170 to train the custom ML model of the ML model type. The agent 160 may further run or execute the custom ML model to generate a processing result to fulfill the user request. For example, the agent 160 may use the ML model running tool 180 to run the custom ML model to generate the processing result.

The agent 160 may generate a visual representation (e.g., using a visualization tool that may be provided by the model training service 110) of the processing result, and provide the visual representation to the user device 150 via the user interface module 104. In some implementations, by utilizing the LLM 130 and the ontology 105 for analyzing the user request, the agent 160 may generate the visual representation that is consistent with the user request or intent of the user device 150. For example, based on user inputs identifying a data set that relates to housing prices in a geographical region and providing a user request that states "create a forecast for the next 6 months," the agent 160 may generate the visual representation including a chart or a drawing that plots or shows housing prices in the geographical region for each of the next 6 months. The chart may also include housing prices in the geographical region in the past such that a user of the user device 150 may observe a trend through the visual representation.

Additionally and/or optionally, the agent 160 may enable validations on outputs from the LLM 130. More specifically, the agent 160 may automatically verify that a portion of a data set identified by the LLM 130 is relevant to perform the task requested by the user device 150 or satisfies one or more criteria. For example, based on a user request, the agent 160 may infer a desired output format or type (e.g., a string, text, binary, floating point, character, Boolean, timestamp, date) of a user of the user device 150, and evaluate if the portion of the data set identified by the LLM 130 includes the desired output format or type. As another example, the agent 160 may check if the portion of the data set identified by the LLM 130 is consistent or coherent with units of measurement specified by a user request and/or the ontology 105. Additionally and/or alternatively, the agent 160 may provide the portion of the data set identified by the LLM 130 to the user device 150 through the user interface module 104 to allow the user device 150 to confirm if the portion of the data set meets expectation.

When the agent 160 validates outputs from the LLM 130, the agent 160 may proceed to next stages of operations. For example, in response to automatically verifying that the portion of the data set is relevant to perform the task request by the user device 150, the agent 160 may use the LLM 130 to generate a ML model training configuration based at least on the portion of the data set. But when the agent 160 determines that the portion of the data set identified by the LLM 130 does not satisfy the one or more criteria, the agent 160 may automatically update the portion of the data set for generating the ML model training configuration. For example, the agent 160 may automatically convert the portion of the data set to a user's desired output format.

Alternatively, the agent 160 may cause the LLM 130 to identify a different portion of the data set, and provide some context to instruct the LLM 130 to avoid identifying the portion of the data that does not satisfy the one or more criteria. In some implementations, the portion of the data set that does not satisfy the one or more criteria may be identified by the LLM 130 in a previous iteration and may result in errors when used for training a custom ML model. By providing the LLM 130 with instructions and context for generating outputs, the LLM 130 may advantageously generate outputs that more likely to meet user expectations.

In some implementations, the agent 160 may train more than one ML model, and select the best ML model for performing a specific task specified or inferred from a user request. For example, the agent 160 may use the LLM 130 to identify a first ML model type based on a user request and the ontology 105, use the LLM 130 to generate a first ML model training configuration, and execute the first ML model training configuration to train a first custom ML model to perform the specific task. The agent 160 may further use the LLM 130 to identify a second ML model type based on the user request, the ontology 105, and an instruction to avoid identifying the first ML model type. Based at least on the second ML model type, the agent 160 may generate a second ML model training configuration to train a second custom ML model to perform the specific task.

The agent 160 may then determine whether the first custom ML model is superior to perform the specific task as compared to the second custom ML model. The determination may be based on various metrics, such as accuracy of a trained model compared with golden processing results, latency associated with a trained model, resources or memory utilized while executing a trained model, or other performance metrics. Additionally and/or alternatively, the determination may be based on physical characteristics of custom ML models, such as number of layers, number of nodes, memory capacity used to store a custom ML model itself, or the like. Responsive to determining that the first custom ML model is superior to perform the specific task as compared to the second custom ML model, the agent 160 may select and/or store (e.g., as a ML model data object in a database) the first custom ML model to perform the specific task.

### Example Database and Data Models

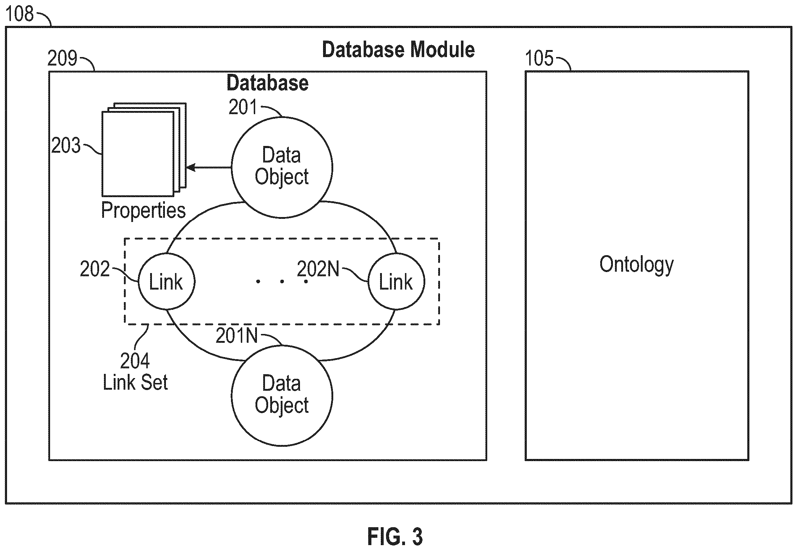

FIG. 3 illustrates an object-centric conceptual data model in the database module 108 of the automated model training system 102 according to various implementations of the present disclosure. The database module 108 may store the ontology 105 and the database 209. The ontology 105, as noted above, may include stored information providing a data model for storage of data in the database 209. The ontology 105 may be defined by one or more data object types, which may each be associated with one or more property types. At the highest level of abstraction, data object 201 is a container for information representing things in the world. For example, the data object 201 can represent an entity such as a particular person, place, organization, date, market instrument, item, or other noun, where the entity may appear in text data such as a document, an e-mail message, a news report, a written paper, an article, or the like. Data object 201 can also represent an event that happens at a point in time or for a duration. Each data object 201 may be associated with a unique identifier that uniquely identifies the data object within the database 209 of the database module 108.

In various implementations, different types of data objects may have different property types. For example, a "Person" data object might have an "Eye Color" property type and an "Event" data object might have a "Date" property type. Each property 203 as represented by data in the database module 108 may have a property type defined by the ontology 105 used by the database module 108. Objects may be instantiated in the database 209 in accordance with the corresponding object definition for the particular object in the ontology 105. For example, a specific monetary payment (e.g., an object of type "event") of US$30.00 (e.g., a property of type "currency") taking place on 3/27/2009 (e.g., a property of type "date") may be stored in the database 209 as an event object with associated currency and date properties as defined within the ontology 105. The data objects defined in the ontology 105 may support property multiplicity. In particular, the data object 201 may be allowed to have more than one property 203 of the same property type. For example, a "Person" data object might have multiple "Address" properties or multiple "Name" properties. Each link 202 represents a connection between two data objects 201. In one implementation, the connection is either through a relationship, an event, or through matching properties. A relationship connection may be asymmetrical or symmetrical. For example, "Person" data object A may be connected to "Person" data object B by a "Child Of" relationship (where "Person" data object B has an asymmetric "Parent Of" relationship to "Person" data object A), a "Kin Of" symmetric relationship to "Person" data object C, and an asymmetric "Member Of" relationship to "Organization" data object X. The type of relationship between two data objects may vary depending on the types of the data objects. For example, "Person" data object A may have an "Appears In" relationship with "Document" data object Y or have a "Participate In" relationship with "Event" data object E. As an example of an event connection, two "Person" data objects may be connected by an "Airline Flight" data object representing a particular airline flight if they traveled together on that flight, or by a "Meeting" data object representing a particular meeting if they both attended that meeting. In one implementation, when two data objects are connected by an event, they are also connected by relationships, in which each data object has a specific relationship to the event, such as, for example, an "Appears In" relationship.

As an example of a matching properties connection, two "Person" data objects representing a brother and a sister, may both have an "Address" property that indicates where they live. If the brother and the sister live in the same home, then their "Address" properties likely contain similar, if not identical property values. In one implementation, a link between two data objects may be established based on similar or matching properties (e.g., property types and/or property values) of the data objects. These are just various examples of the types of connections that may be represented by a link and other types of connections may be represented; implementations are not limited to any particular types of connections between data objects. For example, a document might contain references to two different objects. For example, a document may contain a reference to a payment (one object), and a person (a second object). A link between these two objects may represent a connection between these two entities through their co-occurrence within the same document. Each data object 201 can have multiple links with another data object 201 to form a link set 204. For example, two "Person" data objects representing a husband and a wife could be linked through a "Spouse Of" relationship, a matching "Address" property, and one or more matching "Event" properties (e.g., a wedding). Each link 202 as represented by data in the database 209 may have a link type defined by the ontology 105 and/or used by the database 209.

For ease of understanding, in some implementations, data objects (e.g., the data object 201 and the data object 201N), links between data objects (e.g., the link 202 and link 202N) that may represent relationships between the data objects, and properties of data objects (e.g., the properties 203) can be visualized using one or more graphical user interfaces (GUI). For example, an example user interface may show a graphical representation of relationships between data objects that are represented as nodes in the graphical representation. The data objects may include, for example, person data objects, flight data objects, account data objects, computer data objects, and/or the like. The objects/nodes may have relationships and/or links with any of the other objects/nodes.

In some implementations, relationships between data objects may be stored as links, or in some implementations, as properties, where a relationship may be detected between the properties. In some cases, as stated above, the links may be directional. For example, a payment link may have a direction associated with the payment, where one person object is a receiver of a payment, and another person object is the payer of payment.

In addition to visually showing relationships between the data objects, a user interface may allow various other manipulations. For example, the objects within database module 108 may be searched using a search interface (e.g., text string matching of object properties), inspected (e.g., properties and associated data viewed), filtered (e.g., narrowing the universe of objects into sets and subsets by properties or relationships), and statistically aggregated (e.g., numerically summarized based on summarization criteria), among other operations and visualizations.

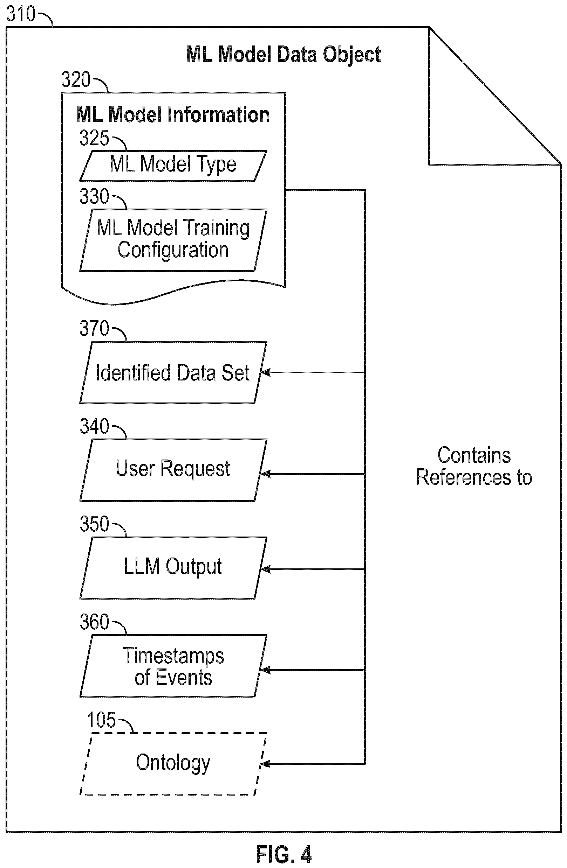

FIG. 4 is a block diagram illustrating an example ML model data object 310, according to various implementations of the present disclosure. As indicated above, the ML model data object 310 may be stored by the agent 160 in the database 209 of the database module 108. In various implementations, the agent 160 may utilize the ML model data object 310 to store information and/or data associated with a custom ML model that is trained to fulfill a user request for various purposes. The ML model data object 310 may be linked to data object(s) that represent a user request 340 received from the user device 150 and/or an identified data set 370 (e.g., a portion of a data set identified by the LLM 130). Additionally and/or optionally, the ML model data object 310 may be linked to the ML model information 320 that includes a ML model type 325 and a ML model training configuration 330 that are used to train the custom ML model. The ML model data object 310 may further be linked to timestamps of events 360 (e.g., including one or more timestamps indicating when the custom ML model is trained), and/or other information (e.g., LLM output 350 that is generated by the LLM 130 when used by the agent 160) associated with the custom ML model.

Additionally and/or optionally, although not shown in FIG. 4, the ML model data object 310 may include and/or be linked to the custom ML model that may be stored as a data structure including parameters, nodes, layers, or other information related to the custom ML model. The agent 160 may utilize the ML model data object 310 and/or additional data objects to automatically generate processing results, or for other purposes. For example, the agent 160 may leverage the ML model data object 310 for reusing the custom ML model without going through again the processes related to identifying relevant data for training the custom ML model. More specifically, the agent 160 may determine that the custom ML model can be used to fulfill a later received user request from the user device 150 based at least on the later received user request, the ML model data object 310, and the ontology 105 when the later received user request is similar to a previously received user request (e.g., both requests are about predicting supply of a material except for different time periods in the future). In response to determining that the custom ML model can be used to fulfill the later received user request, the agent 160 may execute the custom ML model to generate another processing result to fulfill the later received user request. Advantageously, the capability of reusing trained model that is adequate in fulfill user request received in the future improves efficiency of the automated model training system 102.

### Example Functionality and Operations of the System

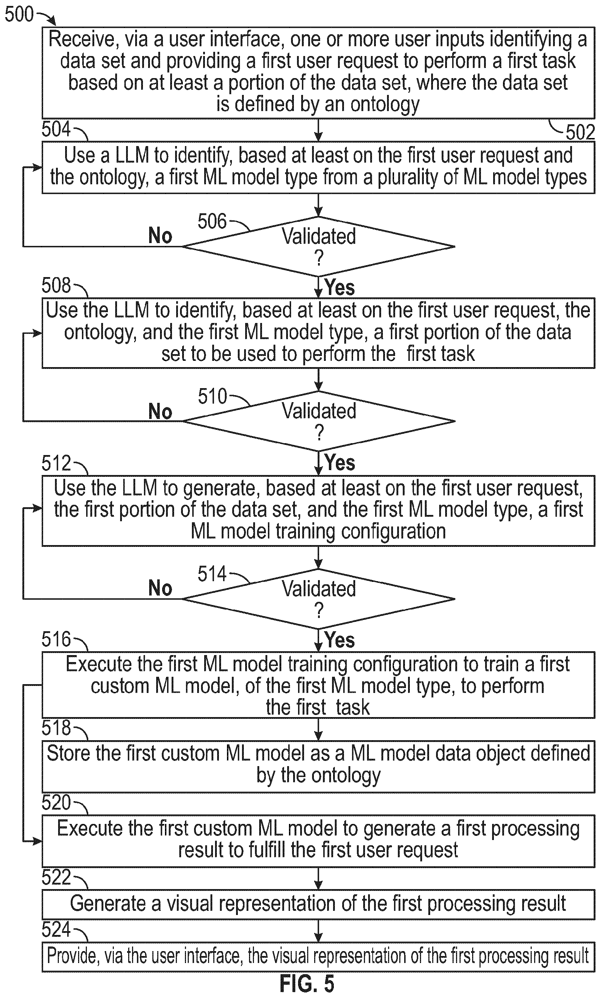

FIGS. 5, 6, 7, and 8 show flowcharts illustrating example operations of the automated model training system 102 (and/or various other aspects of the example computing environment 100), according to various embodiments. The blocks of the flowcharts illustrate example implementations, and in various other implementations various blocks may be rearranged, optional, and/or omitted, and/or additional block may be added. In various embodiments, the example operations of the system illustrated in FIGS. 5, 6, 7, and 8 may be implemented, for example, by the one or more aspects of the automated model training system 102, various other aspects of the example computing environment 100, and/or the like.

FIG. 5 depicts a flowchart illustrating an example method 500 according to various embodiments. The method 500 may be implemented, for example, by the automated model training system 102 of FIGS. 1 and 2 to train a custom ML model using one or more LLMs (e.g., LLM 130a, 130b, 130) and the ontology 105 for performing a task requested by the user device 150.

At block 502, the automated model training system 102 (e.g., the agent 160) may receive via the user interface module 104 one or more user inputs from the user device 150 identifying a data set and providing a first user request to perform a first task based on the data set. As noted above, the data set may include any type of electronic data, such as text, files, documents, books, manuals, time series data, emails, images, audio, video, databases, metadata, positional data (e.g., geo-coordinates), sensor data, web pages, and/or any combination of the foregoing and/or the like. The data set may be compiled by individual users, public, and/or private entities, and may contain any type of information, such as distribution statistics, regulatory information, inventory data, supply chain management information, statistical data, and/or any combination of the foregoing. The data set can be obtained from a data source (e.g., a third-party or data source external to the automated model training system 102) such as the data processing service 120 and stored in the database module 108 of the automated model training system 102 using, based on, and/or defined by the ontology 105, which may define document/data types and associated properties, and relationships among documents/data types, properties, and/or the like.

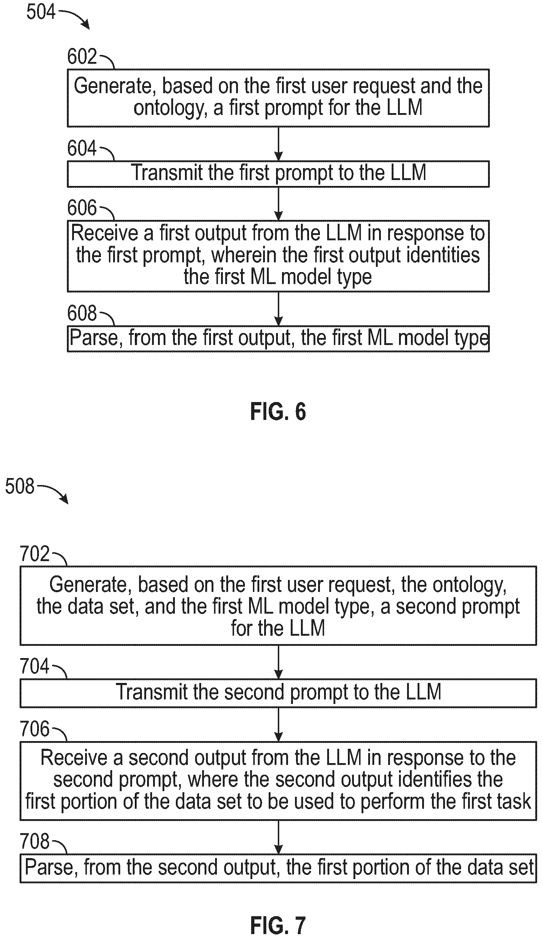

At block 504, the automated model training system 102 (e.g., the agent 160) may use the LLM 130 to identify, based at least on the first user request and the ontology 105, a first ML model type. Based on the first user request and the ontology 105, the LLM 130 may generate an output that identifies the first ML model type. For example, the LLM 130 may analyze the first user request (e.g., "create a forecast for the next 3 months") based on the ontology 105 to generate an output identifying a "prophetic" model type through at least interpreting the word "forecast." An example implementation of the block 504 for using the LLM 130 to identify the first ML model type will be illustrated below in FIG. 6.

Instead of directly proceeding from block 504 to block 508, the method 500 may optionally proceed to block 506. At block 506, the automated model training system 102 may validate or verify whether the first ML model type is suitable for fulfilling the first user request from the user device 150 based on one or more criteria. For example, based at least on the first user request (e.g., "create a forecast for the next 3 months"), the agent 160 may validate the first ML model type when the first ML model type is a "prophetic" model type. In contrast, the agent 160 may not validate the first ML model type when the first ML model type is a "classifier" model type.

The method 500 then varies according to whether the agent 160 validates the first ML model type. In the instance that the agent 160 does not validate the first ML model type, block 506 evaluates as "No" and the method 500 returns to block 504, where the agent 160 may use or cause the LLM 130 to identify a second ML model type. More specifically, the agent 160 may prompt the LLM 130 to identify the second ML model type and instruct the LLM 130 to avoid identifying the first ML model type when identifying the second ML model type.

In the instance that the agent 160 validates the first ML model type, block 506 evaluates as "Yes" and the method 500 proceeds to block 508. At block 508, the agent 160 may use the LLM 130 to identify, based at least on the first user request, the ontology 105, and the first ML model type, a first portion of the data set to be used to perform the first task. More specifically, based on the first user request, the ontology 105, and the first ML model type, the LLM 130 may generate an output that identifies the first portion of the data set that is relevant to the first user request and/or can be used to train a custom ML model for performing the first task. For example, by analyzing the phrase "next 3 months" within the first user request (e.g., "create a forecast for the next 3 months") and the data set (e.g., historical statistics of demand for a material in certain geometric locations) defined by the ontology 105, the LLM 130 may identify the first portion of the data set including time-series data and locational information that can be utilized to train a custom ML model for creating the forecast, while exclude remaining portions (e.g., footnotes, index, table of contents, or the like) of the data set to be used for further processing. An example implementation of the block 508 for using the LLM 130 to identify the first portion of the data set to be used to perform the first task will be illustrated below in FIG. 7.

Instead of directly proceeding from block 508 to block 512, the method 500 may optionally proceed to block 510. At block 510, the automated model training system 102 may validate or verify whether the first portion of the data set is relevant to perform the first task. In some implementations, the automated model training system 102 may automatically verify that the first portion of the data set identified by the LLM 130 is relevant to perform the first task requested by a user or satisfies one or more criteria. For example, based on the first user request, the agent 160 may infer a user's desired output format or type (e.g., a string, text, binary, floating point, character, Boolean, timestamp, date), and evaluate if the first portion of the data set identified by the LLM 130 includes the user's desired output format or type. As another example, the agent 160 may check if the first portion of the data set identified by the LLM 130 is consistent or coherent with units of measurement specified by the first user request and/or the ontology 105. In other implementations, the agent 160 may provide the first portion of the data set identified by the LLM 130 to the user device 150 through the user interface module 104 to allow the user device 150 to confirm if the first portion of the data set meets expectation.

The method 500 then varies according to whether the agent 160 validates that the first portion of the data set is relevant to perform the first task. In the instance that the agent 160 does not validate the first portion of the data set, block 510 evaluates as "No" and the method 500 returns to block 508, where the agent 160 may use or cause the LLM 130 to identify a second portion of the data set for performing the first task. More specifically, the agent 160 may prompt the LLM 130 to identify the second portion of the data set and instruct the LLM 130 to avoid identifying the first portion of the data set when identifying the second portion of the data set. Alternatively and/or optionally, the agent 160 may automatically update the first portion of the data set. For example, the agent 160 may automatically convert the first portion of the data set to a user's desired output format. Although not shown in FIG. 5, in some implementations, the method 500 may return to block 504 in the instance that block 510 evaluates as "No."

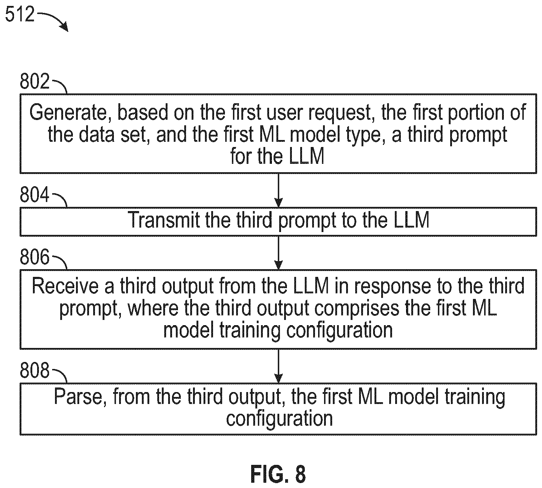

In the instance that the agent 160 validates that the first portion of the data set is relevant to perform the first task, block 510 evaluates as "Yes" and the method 500 proceeds to block 512. At block 512, the automated model training system 102 (e.g., the agent 160) may further use the LLM 130 to generate, based at least on the first user request, the first portion of the data set, and the first ML model type, a first ML model training configuration. More specifically, based on the first user request, the first portion of the data set, and the first ML model type, the LLM 130 may generate an output comprising the first ML model training configuration. The first ML model training configuration may include values, thresholds, parameters, settings, or other information to setup and/or enable training a first custom ML model of the first ML model type using the first portion of the data set as training data. An example implementation of the block 512 for using the LLM 130 to generate the first ML model training configuration will be illustrated below in FIG. 8.

Instead of directly proceeding from block 512 to block 516, the method 500 may optionally proceed to block 514. At block 514, the automated model training system 102 may validate or verify, based on one or more constraints, whether the first ML model training configuration is suitable to train a first custom ML model to perform the first task. For example, the agent 160 may check if the first ML model training configuration provided by the LLM 130 conforms to particular formats (e.g., JavaScript Object Notation "JSON"). As another example, the agent 160 may check whether the first ML model training configuration is executable for the ML model training tool 170. More specifically, the agent 160 may check whether the first ML model training configuration includes training parameters or setting used by the ML model training tool 170 to train the first custom ML model.

The method 500 then varies according to whether the agent 160 validates the first ML model training configuration. In the instance that the agent 160 does not validate the first ML model training configuration, block 514 evaluates as "No" and the method 500 returns to block 512, where the agent 160 may use or cause the LLM 130 to generate a second ML model training configuration. More specifically, the agent 160 may prompt the LLM 130 to generate the second ML model training configuration by instructing the LLM 130 that certain parameters included in the second ML model training configuration should be increased and/or decreased compared with corresponding parameters included in the first ML model training configuration. Alternatively and/or optionally, the agent 160 may automatically update (e.g., fix a formality issue, add a setting) the first ML model training configuration such that the ML model training tool 170 can execute the first ML model training configuration to train a custom ML model. Although not shown in FIG. 5, in some implementations, the method 500 may return to block 504 or block 508 in the instance that block 514 evaluates as "No."

In the instance that the agent 160 validates first ML model training configuration, block 514 evaluates as "Yes" and the method 500 proceeds to block 516. At block 516, the automated model training system 102 (e.g., the agent 160) may use the ML model training tool 170 to execute the first ML model training configuration to train a first custom ML model of the first ML model type to perform the first task.

The method 500 may further optionally proceed to block 518. At block 518, the automated model training system 102 may store the first custom ML model as a ML model data object defined by the ontology 105. For example, the agent 160 may store the first custom ML model into the database module 108 or the agent storage 190 as the ML model data object 310 defined by the ontology 105.

The method 500 may further optionally proceed to block 520. At block 520, the automated model training system 102 may execute the first custom ML model to generate a first processing result to fulfill the first user request. For example, the agent 160 may use the ML model running tool 180 to run or execute the first custom ML model to generate the first processing result.

The method 500 may further optionally proceed to block 522. At block 522, the automated model training system 102 may generate a visual representation of the first processing result. For example, the agent 160 may use a visualization tool provided by the model training service 110 to generate the visual representation of the first processing result.

The method 500 may further optionally proceed to block 524. At block 524, the automated model training system 102 may provide, via the user interface module 104, the visual representation of the first processing result to the user device 150. By utilizing the LLM 130 and the ontology 105 for analyzing the first user request, the automated model training system 102 (e.g., the agent 160) may advantageously generate the visual representation that is consistent with the user request or intent of a user of the user device 150. For example, based on user inputs identifying a data set that relates to housing prices in a geographical region and providing a user request that states "create a forecast for the next 6 months," the agent 160 may generate the visual representation including a chart or a drawing that plots or shows housing prices in the geographical region for each of the next 6 months. The chart may also include housing prices in the geographical region in the past such that the user of the user device 150 may observe a trend through the visual representation.

FIG. 6 is a flowchart illustrating an example implementation of the block 504 for using the LLM 130 to identify the first ML model type, according to various embodiments of the present disclosure. In various implementations, the example implementation includes blocks 602, 604, 606, and 608 that may be performed in part or in full by the automated model training system 102. In various implementations, some of the blocks 602, 604, 606, and 608 may be performed by the agent 160 concurrently and/or sequentially.

At block 602, the agent 160 may generate a first prompt (e.g., text file) for the LLM 130 based on the first user request and the ontology 105. The first prompt may include or otherwise specify the first user request and information related to ML model type identification, such as ML model types (e.g., prophetic model type, classifier model type, segmentation model type, estimation model type, and/or the like) available or known to the automated model training system 102, definitions and/or formats of model input(s) associated with each of the ML model types, definitions and/or formats of model output(s) associated with each of the ML model types, or the like. The first prompt may further identify the ontology 105 to the LLM 130, and include instructions to the LLM 130 to analyze, reason, or interpret the first user request based on the ontology 105 for identifying the first ML model type that is suitable for fulfilling the first user request.

As noted above, the first prompt may also include information about the data set. The information about the data set may be at least in part specified, defined, and/or included in the ontology 105. The information about the data set that may be defined by the ontology 105 can include object types, data fields, relationships among data fields, data structures (e.g., columns and rows of data tables), naming of object types and data fields, properties of data fields (e.g., time-series data, locational data, or the like) associated with the data set, or other information that may be helpful for the LLM 130 to identify the ML model type. By including at least the user request and the information about the data set defined by the ontology 105, the first prompt may enable the LLM 130 to more effectively identify the ML model type suitable for training a custom ML model to perform the task. For example, based on the user request and information about ML model types available to the automated model training system 102, the LLM 130 may identify a couple of ML model types that may be useful to perform the task. The LLM 130 may further reason, analyze, and/or refer to the information about the data set defined by the ontology 105 to advantageously identify or select the ML model type suitable to perform the task. More specifically, the information about the data set defined by the ontology 105 may specify formats of data in the data set. Based on the formats of the data, the LLM 130 may determine that certain ML model type is not suitable for training a custom ML model because of incompatible data formats used by the certain ML model type and the data set. Additionally and/or optionally, the first prompt may include instructions to instruct the LLM 130 to identify the ML model type. The first prompt may instruct the LLM 130 on what should be included in its output and/or what should not be included in its output.

At block 604, the agent 160 may transmit the first prompt to the LLM 130. For example, the agent 160 may transmit the first prompt to the LLM 130 via the network 140 and/or a communication bus associated with the automated model training system 102.

At block 606, the agent 160 may receive a first output from the LLM 130 in response to the first prompt. The first output may identify and/or include the first ML model type. For example, the LLM 130 may analyze the first user request (e.g., "create a forecast for the next 3 months") based on the ontology 105 to generate the first output identifying a "prophetic" model type through at least interpreting the word "forecast."

At block 608, the agent 160 may parse the first ML model type from the first output generated by the LLM 130. In some implementations, the first output may include various information (e.g., notes generated by the LLM 130 to summarize how the first ML model type is identified among a plurality of ML model types) besides the first ML model type. The agent 160 may obtain the first ML model type by parsing, from the first output, the first ML model type.

FIG. 7 is a flowchart illustrating an example implementation of the block 508 for using the LLM 130 to identify, based at least on the first user request, the ontology 105, and the first ML model type, the first portion of the data set to be used to perform the first task, according to various embodiments of the present disclosure. In various implementations, the example implementation includes blocks 702, 704, 706, and 708 that may be performed in part or in full by the automated model training system 102. In various implementations, some of the blocks 702, 704, 706, and 708 may be performed by the agent 160 concurrently and/or sequentially.

At block 702, the agent 160 may generate a second prompt (e.g., text file) for the LLM 130 based on the first user request, the ontology 105, the data set identified by the user device 150, and the first ML model type. The second prompt may instruct the LLM 130 to identify, based on the first user request, the ontology 105, and the first ML model type, the first portion of the data set that is relevant to perform the first task. The second prompt may further include information related to training data identification, such as information about the data set, metadata associated with the ML model type, descriptive information about inputs and outputs of the first ML model type, or the like.

As noted above, the information about the data set may be at least in part specified, defined, and/or included in the ontology 105. More specifically, the information about the data set that may be defined by the ontology 105 can include object types, data fields, relationships among data fields, data structures (e.g., columns and rows of data tables), naming of object types and data fields, properties of data fields (e.g., time-series data, locational data, or the like) associated with the data set, or other information that may be useful for the LLM 130 to analyze and/or search the data set for identifying the portion of the data set relevant to perform the task. By including at least the user request, the ML model type, and the information about the data set defined by the ontology 105, the second prompt may enable the LLM 130 to more effectively identify the portion of the data set that is relevant to perform the task. For example, based on the second prompt, the LLM 130 may analyze the user request to derive an intent (e.g., making a prediction, estimation, or a classification) of the user device 150. The LLM 130 may analyze the ML model type and information related to the ML model type to determine properties, characteristics, or attributes of data that would be useful to train a custom ML model of the ML model type. In view of the analyses on the user request and the ML model type, the LLM 130 may reason, analyze, and/or refer to the information (e.g., properties and/or relationships of data fields) about the data set defined by the ontology 105 to advantageously pinpoint or identify the portion of the data set that is relevant to perform the task. For example, the analyses on the user request and the ML model type may indicate to the LLM 130 that time-series data should be used to train a custom ML model of the ML model type. The information about the data set defined by the ontology 105 may indicate to the LLM 130 the portion of the data set that includes the time-series data. Additionally and/or optionally, the second prompt may include instructions to instruct the LLM 130 to identify the portion of the data set that is relevant to perform the task. The second prompt may further instruct the LLM 130 on what should be included in its output and/or what should not be included in its output.

At block 704, the agent 160 may transmit the second prompt to the LLM 130. For example, the agent 160 may transmit the second prompt to the LLM 130 via the network 140 and/or a communication bus associated with the automated model training system 102.

At block 706, the agent 160 may receive a second output from the LLM 130 in response to the second prompt. The second output may identify and/or include the first portion of the data set to be used to perform the first task. For example, the LLM 130 may generate the second output that identifies the first portion of the data set that is relevant to the first user request and/or can be used to train the first custom ML model for performing the first task.

As noted above, the data set may correspond to a large corpus of documents and/or tables and may include parts, pages, portions, or entries that may be irrelevant or not useful for performing the task. For example, by analyzing the phrase "next 3 months" within the first user request (e.g., "create a forecast for the next 3 months") and the data set (e.g., historical statistics of demand for a material in certain geometric locations) defined by the ontology 105, the LLM 130 may identify the first portion of the data set that includes time-series data and locational information that can be utilized to train the first custom ML model for creating the forecast, and exclude remaining portions (e.g., footnotes, index, table of contents, or the like) of the data set to be used for further processing. In some implementations, the LLM 130 may execute a search (e.g., a similarity search), based on the first user request, the ontology 105, and/or the first ML model type, on the data set to identify the first portion of the data set.

At block 708, the agent 160 may parse the first portion of the data set from the second output generated by the LLM 130.

FIG. 8 is a flowchart illustrating an example implementation of the block 512 for using the LLM 130 to generate the first ML model training configuration, according to various embodiments of the present disclosure. In various implementations, the example implementation includes blocks 802, 804, 806, and 808 that may be performed in part or in full by the automated model training system 102. In various implementations, some of the blocks 802, 804, 806, and 808 may be performed by the agent 160 concurrently and/or sequentially.

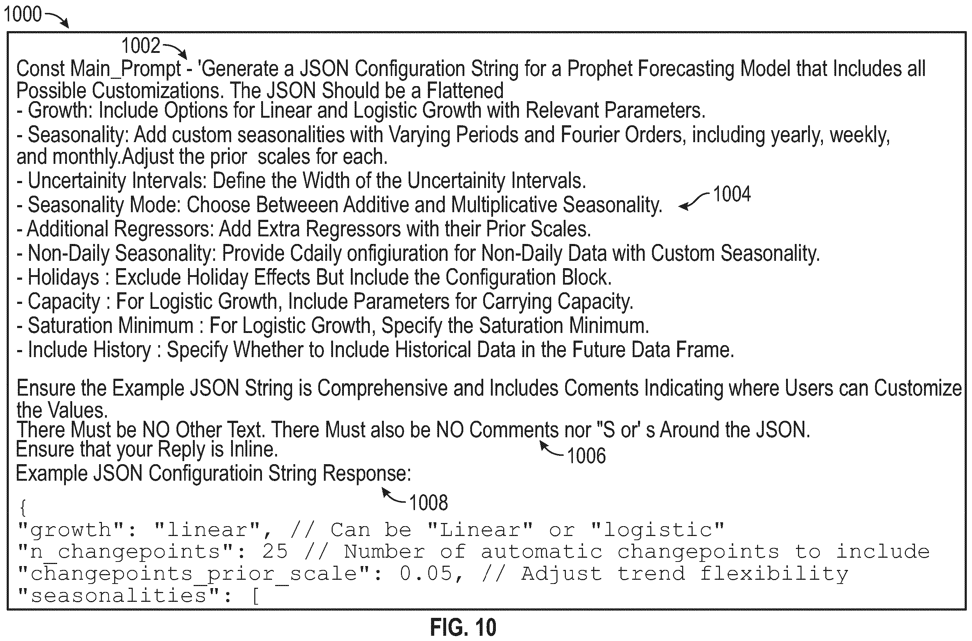

At block 802, the agent 160 may generate a third prompt (e.g., text file) for the LLM 130 based on the first user request, the first portion of the data set, and the first ML model type. The third prompt may include or otherwise specify the first user request, the first portion of the data set, and the first ML model type, and may instruct the LLM 130 to generate the first ML model training configuration for training a first custom ML model to perform the first task. The third prompt may instruct the LLM 130 to generate output conforming to particular formats (e.g., JavaScript Object Notation "JSON") and provide example ML model training configuration to the LLM 130 to avoid undesired outputs from the LLM 130. The third prompt may further include definitions or explanations of terminologies defined in the ontology 105 and/or related to the first user request or the first portion of the data set to assist the LLM 130 to generate the first ML model training configuration. An example prompt generated by the agent 160 for the LLM 130 to generate a ML model training configuration will be illustrated below in FIG. 10.

At block 804, the agent 160 may transmit the third prompt to the LLM 130. For example, the agent 160 may transmit the third prompt to the LLM 130 via the network 140 and/or a communication bus associated with the automated model training system 102.

At block 806, the agent 160 may receive a third output from the LLM 130 in response to the third prompt. The third output may comprise the first ML model training configuration. The first ML model training configuration may include values, thresholds, parameters, settings, or other information to setup and/or enable training the first custom ML model of the first ML model type using the first portion of the data set as training data.

At block 808, the agent 160 may parse the first ML model training configuration from the third output generated by the LLM 130. The agent service 106 may further cause the ML model training tool 170 to train the first custom ML model using the first ML model training configuration.

### Example User Interfaces and Related Functionality

FIG. 9 shows an example interactive graphical user interface 900 through which the automated model training system 102 may receive one or more user inputs identifying a data set and providing a user request to perform a task based on the data set, according to various implementations of the present disclosure. In various implementations, the example user interface 900 may be presented through the user interface module 104 of the automated model training system 102 and/or a user interface of the user device 150.

As shown in FIG. 9, the user interface 900 may include a display portion 902, a display portion 904, and a button 906. The display portion 902 can include a dropdown icon of the user interface 900 to allow a user of the user device 150 to identify and/or select a data set for performing a task indicated in the display portion 904. As noted above, the data set may include any type of electronic data, such as text, files, documents, books, manuals, time series data, emails, images, audio, video, databases, metadata, positional data (e.g., geo-coordinates), sensor data, web pages, and/or any combination of the foregoing and/or the like. Here, the display portion 902 shows "Frozen Wheat Hot Dog Buns (1KG) @ Long Beach Distribution," indicating the data set identified by the user of the user device 150 relates to supply and/or distribution information related to "Frozen Wheat Hot Dog Buns" around the "Long Beach" geographical region.

The display portion 904 allows the user of the user device 150 to indicate or specify the user request to perform the task based on the data set identified in the display portion 902. As noted above, the user request may be any natural language request for some data analysis or tasks (e.g., prediction, image recognition, audio processing, natural language understanding, recommendations, classifications, segmentation, transcription, estimation) to be performed, and/or problems to be solved by the automated model training system 102 based on the data set that is identified in the display portion 902. Here, the display portion 904 shows "Create a forecast for the next 3 months and keep in mind weekly seasonality," indicating that the task for the automated model training system 102 to perform is to make a forecast for the next 3 months by taking weekly seasonality into consideration.

As noted above, although the user request shown in the display portion 904 may be brief, under-specified, or unclear in specifying the task or stating how the task is to be performed, the automated model training system 102 may nevertheless use the ontology 105 and the LLM 130 to more accurately infer user intent based on the user request and the data set identified in the display portion 902 to generate a ML model training configuration for training a custom ML model to perform the task with enhanced performance.

The button 906 allows the user of the user device 150 to trigger the automated model training system 102 to perform the task specified in the display portion 904 based on the data set identified in the display portion 902. Responsive to a user click on the button 906, the automated model training system 102 may utilize the method 500 to train and execute a custom ML model for generating a processing result and a visual representation of the processing result (e.g., a chart) that will be described in FIG. 11.

FIG. 10 shows an example prompt 1000 for a LLM (e.g., the LLM 130a, the LLM 130b, and/or the LLM 130) to generate a ML model training configuration that can be used to train a custom ML model for fulfilling the user request shown in the display portion 904, according to various implementations of the present disclosure. In various implementations, the example prompt 1000 may be generated by the automated model training system 102 (e.g., the agent 160) of FIGS. 1 and/or 2, and transmitted by the automated model training system 102 to an LLM (e.g., the LLM 130, the LLM 130a, or the LLM 130b) for generating the ML model training configuration. In some implementations, the prompt 1000 may be a text file generated by the agent 160.

As illustrated in FIG. 10, the prompt 1000 includes the portion 1002, the portion 1004, the portion 1006, and the portion 1008. The portion 1002 may prompt the LLM to generate the ML model training configuration. Here, the portion 1002 reads "Generate a JSON configuration string for a Prophet forecasting model that includes all possible customizations," indicating to the LLM that the ML model training configuration should be conforming to the JavaScript Object Notation ("JSON") and will be utilized to train a "Prophet" forecasting model.

The portion 1004 includes definitions or explanations of terminologies defined in the ontology 105 and/or related to the user request shown in the display portion 904 and/or a portion of the data set identified in the display portion 902 to assist the LLM to generate the ML model training configuration. Here, for example, the portion 1004 shows "Seasonality: Add custom seasonalities with varying periods and Fourier orders, including yearly, weekly, and monthly. Adjust the prior scales for each." The portion 1004 further incudes other terminologies, parameters, and/or settings for the LLM to generate the ML model training configuration to train a custom ML model customized or specific to the user request shown in the display portion 904 and the data set identified in the display portion 902.

The portion 1006 includes instructions and/or other information to the LLM regarding the generation of the ML model training configuration. Here, the portion 1006 provides to the LLM at least "Ensure the example JSON string is comprehensive and includes comments indicating where users can customize the values. There must be NO other text. There must also be NO comments nor "s or `s around the JSON."

The portion 1008 includes an example ML model training configuration for the LLM to generate the ML model training configuration. Here, the portion 1008 shows "Example JSON Configuration string response:" and includes example settings, parameters, and/or values that the LLM should refer to when generating the ML model training configuration. In some implementations, the prompt 1000 may be transmitted by the agent 160 to the LLM 130, as illustrated in block 804. Responsive to the prompt 1000, the LLM 130 may generate the third output that comprises the ML model training configuration as illustrated in block 806. The agent 160 may execute the ML model training configuration using the ML model training tool 170 to train a custom ML model, and run the custom ML model using the ML model running tool 180 for fulfilling the user request shown in the display portion 904.

FIG. 11 shows another example interactive graphical user interface 950 associated with the automated model training system 102, according to various implementations of the present disclosure. Using the example interactive graphical user interface 950, the automated model training system 102 may provide a processing result in response to receiving one or more user inputs identifying the data set (as shown in the display portion 902) and providing the user request (as shown in the display portion 904) to perform the task based on the data set, according to various implementations of the present disclosure. In various implementations, the example user interface 950 may be presented through the user interface module 104 of the automated model training system 102 and/or a user interface of the user device 150 in response to a user click from the user device 150 on the button 906.

As shown in FIG. 11, besides the display portion 902, the display portion 904, and the button 906, the user interface 950 may include a display portion 908 that presents a chart showing a forecast requested by the display portion 904. Here, the display portion 908 shows a caption that reads "Forecast with Historical Data." Besides showing the forecast of the supply of the "Frozen Wheat Hot Dog Buns" around the "Long Beach" geographical region in the next three months (as indicated by the display portion 912), the user interface 950 further shows the display portion 910 that shows historical data associated with the supply of the "Frozen Wheat Hot Dog Buns" around the "Long Beach" geographical region.

### Additional Example Implementations and Details

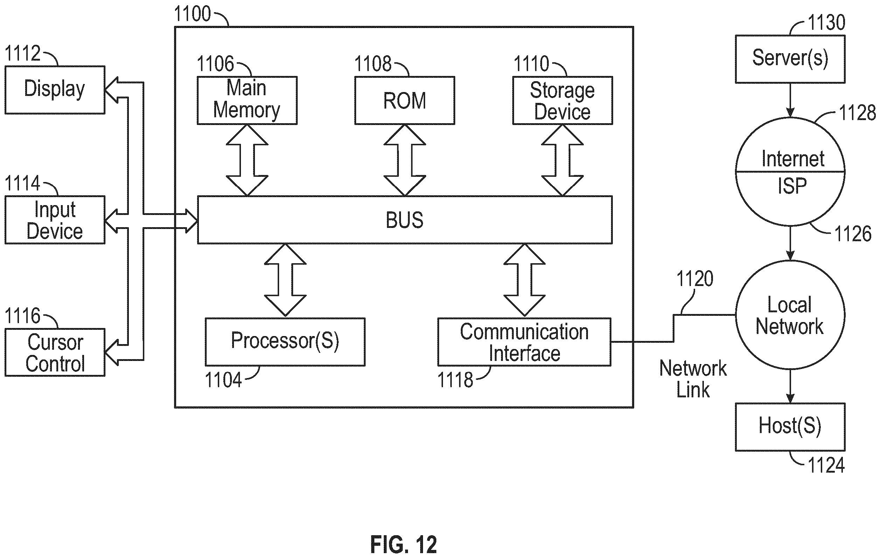

In an implementation of the system (e.g., one or more aspects of the automated model training system 102, one or more aspects of the computing environment 100, and/or the like) may comprise, or be implemented in, a "virtual computing environment". As used herein, the term "virtual computing environment" should be construed broadly to include, for example, computer-readable program instructions executed by one or more processors (e.g., as described in the example of FIG. 12) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In various implementations the virtual computing environment may comprise one or more virtual machines, containers, and/or other types of emulations of computing systems or environments. In various implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In various implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In various alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in various implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 12 shows a block diagram that illustrates a computer system 1100 upon which various implementations and/or aspects (e.g., one or more aspects of the computing environment 100, one or more aspects of the automated model training system 102, one or more aspects of the user device 150, one or more aspects of the data processing service 120, one or more aspects of the LLMs 130a and 130b, and/or the like) may be implemented. Multiple such computer systems 1100 may be used in various implementations of the present disclosure. Computer system 1100 includes a bus 1102 or other communication mechanism for communicating information, and a hardware processor, or multiple processors, 1004 coupled with bus 1102 for processing information. Hardware processor(s) 1104 may be, for example, one or more general purpose microprocessors.

Computer system 1100 also includes a main memory 1106, such as a random-access memory (RAM), cache and/or other dynamic storage devices, coupled to bus 1102 for storing information and instructions to be executed by processor 1104. Main memory 1106 also may be used for storing temporary variables or other intermediate information during execution of instructions to be executed by processor 1104. Such instructions, when stored in storage media accessible to processor 1104, render computer system 1100 into a special-purpose machine that is customized to perform the operations specified in the instructions. The main memory 1106 may, for example, include instructions to implement server instances, queuing modules, memory queues, storage queues, user interfaces, and/or other aspects of functionality of the present disclosure, according to various implementations.

Computer system 1100 further includes a read only memory (ROM) 1108 or other static storage device coupled to bus 1102 for storing static information and instructions for processor 1104. A storage device 1110, such as a magnetic disk, optical disk, or USB thumb drive (Flash drive), and/or the like, is provided and coupled to bus 1102 for storing information and instructions.

Computer system 1100 may be coupled via bus 1102 to a display 1112, such as a cathode ray tube (CRT) or LCD display (or touch screen), for displaying information to a computer user. An input device 1114, including alphanumeric and other keys, is coupled to bus 1102 for communicating information and command selections to processor 1104. Another type of user input device is cursor control 1116, such as a mouse, a trackball, or cursor direction keys for communicating direction information and command selections to processor 1104 and for controlling cursor movement on display 1112. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computer system 1100 may include a user interface module to implement a GUIthat may be stored in a mass storage device as computer executable program instructions that are executed by the computing device(s). Computer system 1100 may further, as described below, implement the techniques described herein using customized hard-wired logic, one or more ASICs or FPGAs, firmware and/or program logic which in combination with the computer system causes or programs computer system 1100 to be a special-purpose machine. According to one implementation, the techniques herein are performed by computer system 1100 in response to processor(s) 1104 executing one or more sequences of one or more computer-readable program instructions contained in main memory 1106. Such instructions may be read into main memory 1106 from another storage medium, such as storage device 1110. Execution of the sequences of instructions contained in main memory 1106 causes processor(s) 1104 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1104 for execution. For example, the instructions may initially be carried on a magnetic disk or solid-state drive of a remote computer. The remote computer can load the instructions into its dynamic memory and send the instructions over a telephone line using a modem. A modem local to computer system 1100 can receive the data on the telephone line and use an infra-red transmitter to convert the data to an infra-red signal. An infra-red detector can receive the data carried in the infra-red signal and appropriate circuitry can place the data on bus 1102. Bus 1102 carries the data to main memory 1106, from which processor 1104 retrieves and executes the instructions. The instructions received by main memory 1106 may optionally be stored on storage device 1110 either before or after execution by processor 1104.

Computer system 1100 also includes a communication interface 1118 coupled to bus 1102. Communication interface 1118 provides a two-way data communication coupling to a network link 1120 that is connected to a local network 1122. For example, communication interface 1118 may be an integrated services digital network (ISDN) card, cable modem, satellite modem, or a modem to provide a data communication connection to a corresponding type of telephone line. As another example, communication interface 1118 may be a local area network (LAN) card to provide a data communication connection to a compatible LAN (or WAN component to communicated with a WAN). Wireless links may also be implemented. In any such implementation, communication interface 1118 sends and receives electrical, electromagnetic, or optical signals that carry digital data streams representing various types of information.

Network link 1120 typically provides data communication through one or more networks to other data devices. For example, network link 1120 may provide a connection through local network 1122 to a host computer 1124 or to data equipment operated by an Internet Service Provider (ISP) 1026. ISP 1126 in turn provides data communication services through the worldwide packet data communication network now commonly referred to as the "Internet" 1028. Local network 1122 and Internet 1128 both use electrical, electromagnetic, or optical signals that carry digital data streams. The signals through the various networks and the signals on network link 1120 and through communication interface 1118, which carry the digital data to and from computer system 1100, are example forms of transmission media.

Computer system 1100 can send messages and receive data, including program code, through the network(s), network link 1120 and communication interface 1118. In the Internet example, a server 1130 might transmit a requested code for an application program through Internet 1128, ISP 1126, local network 1122 and communication interface 1118.

The received code may be executed by processor 1104 as it is received, and/or stored in storage device 1110, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computerized method, performed by a computing system having one or more hardware computer processors and one or more non-transitory computer-readable storage devices storing software instructions executable by the computing system, the computerized method comprising: receiving, via a user interface, one or more user inputs identifying a data set and providing a first user request to perform a first task based on at least a portion of the data set, wherein the data set is defined by an ontology; using a large language model ("LLM") to identify, based at least on the first user request and the ontology, a first machine learning ("ML") model type from a plurality of ML model types; using the LLM to identify, based at least on the first user request, the ontology, and the first ML model type, a first portion of the data set to be used to perform the first task; using the LLM to generate, based at least on the first user request, the first portion of the data set, and the first ML model type, a first ML model training configuration; and executing the first ML model training configuration to train a first custom ML model, of the first ML model type, to perform the first task.

Clause 2. The computerized method of Clause 1, further comprising: executing the first custom ML model to generate a first processing result to fulfill the first user request.

Clause 3. The computerized method of Clause 2, further comprising: generating a visual representation of the first processing result; and providing, via the user interface, the visual representation of the first processing result.

Clause 4. The computerized method of any of Clauses 1-3, wherein using the LLM to identify the first ML model type comprises: generating, based on the first user request and the ontology, a first prompt for the LLM; transmitting the first prompt to the LLM; receiving a first output from the LLM in response to the first prompt, wherein the first output identifies the first ML model type; and parsing, from the first output, the first ML model type.

Clause 5. The computerized method of any of Clauses 1-4, wherein using the LLM to identify the first portion of the data set comprises: generating, based on the first user request, the ontology, the data set, and the first ML model type, a second prompt for the LLM; transmitting the second prompt to the LLM; receiving a second output from the LLM in response to the second prompt, wherein the second output identifies the first portion of the data set to be used to perform the first task; and parsing, from the second output, the first portion of the data set.

Clause 6. The computerized method of any of Clauses 1-5, wherein using the LLM to generate the first ML model training configuration comprises: generating, based on the first user request, the first portion of the data set, and the first ML model type, a third prompt for the LLM; transmitting the third prompt to the LLM; receiving a third output from the LLM in response to the third prompt, wherein the third output comprises the first ML model training configuration; and parsing, from the third output, the first ML model training configuration.

Clause 7. The computerized method of any of Clauses 1-6, wherein the first ML model training configuration uses the first portion of the data set rather than remaining portions of the data set to train the first custom ML model.

Clause 8. The computerized method of any of Clauses 1-7, further comprising: providing, via the user interface, the first portion of the data set; receiving a user input confirming that the first portion of the data set is relevant to perform the first task; and in response to receiving the user input confirming that the first portion of the data set is relevant to perform the first task, using the LLM to generate the first ML model training configuration based at least on the first user request, the first portion of the data set, and the first ML model type.

Clause 9. The computerized method of any of Clauses 1-7, further comprising: automatically verifying that the first portion of the data set is relevant to perform the first task; and in response to automatically verifying that the first portion of the data set is relevant to perform the first task, using the LLM to generate the first ML model training configuration based at least on the first user request, the first portion of the data set, and the first ML model type.

Clause 10. The computerized method of any of Clauses 1-9, further comprising: storing the first custom ML model as a ML model data object defined by the ontology, wherein the ML model data object is associated with at least the first user request, the first portion of the data set, and a timestamp indicating when the first custom ML model is trained.

Clause 11. The computerized method of Clause 10, further comprising: receiving, via the user interface, a second user-identification of the data set and a second user request to perform a second task based on the data set; determining, based at least on the second user request, the ML model data object, and the ontology, that the first custom ML model can be used to fulfill the second user request; and in response to determining that the first custom ML model can be used to fulfill the second user request, executing the first custom ML model to generate a second processing result to fulfill the second user request.

Clause 12. The computerized method of any of Clauses 1-11, further comprising: using the LLM to identify, based on the first user request, the ontology, and a first instruction to avoid identifying the first ML model type, a second ML model type; using the LLM to generate a second ML model training configuration based at least on the first user request, the first portion of the data set, and the second ML model type; and executing the second ML model training configuration to train a second custom ML model to perform the first task.

Clause 13. The computerized method of any of Clauses 1-11, further comprising: using the LLM to identify, based on the first user request, the ontology, the first ML model type, and a first instruction to avoid identifying the first portion of the data set, a second portion of the data set to be used to perform the first task; using the LLM to generate a second ML model training configuration based at least on the first user request, the second portion of the data set, and the first ML model type; and executing the second ML model training configuration to train a second custom ML model to perform the first task.

Clause 14. The computerized method of any of Clauses 12-13, further comprising: determining that the first custom ML model is superior to perform the first task as compared to the second custom ML model; and in response to determining that the first custom ML model is superior to perform the first task as compared to the second custom ML model, selecting or storing the first custom ML model rather than the second custom ML model to perform the first task.

Clause 15. The computerized method of any of Clauses 1-14, further comprising: evaluating the first portion of the data set with reference to one or more criteria; and responsive to determining that the first portion of the data set does not satisfy the one or more criteria, automatically updating the first portion of the data set for the LLM to generate the first ML model training configuration.

Clause 16. The computerized method of any of Clauses 1-14, further comprising: evaluating the first portion of the data set with reference to one or more criteria; and responsive to determining that the first portion of the data set does not satisfy the one or more criteria, using the LLM to identify, based on the first user request, the ontology, the first ML model type, and a second instruction to avoid identifying the first portion of the data set, a third portion of the data set to be used to perform the first task.

Clause 17. The computerized method of any of Clauses 1-16, wherein the LLM executes, based on the first user request, the ontology, and the first ML model type, a search on the data set to identify the first portion of the data set to be used to perform the first task.

Clause 18. The computerized method of any of Clauses 1-17, wherein an artificial intelligence ("AI") agent causes a ML model training tool to execute the first ML model training configuration to train the first custom ML model to perform the first task.

Clause 19. A system comprising: one or more computer-readable storage mediums having program instructions embodied therewith; and one or more processors configured to execute the program instructions to cause the system to perform the computerized method of any of Clauses 1-18.

Clause 20. A computer program product comprising one or more computer-readable storage mediums having program instructions embodied therewith, the program instructions executable by one or more processors to cause the one or more processors to perform the computerized method of any of Clauses 1-18.

## Claims

1. A computerized method, performed by a computing system having one or more hardware computer processors and one or more non-transitory computer-readable storage devices storing software instructions executable by the computing system, the computerized method comprising:
receiving, via a user interface, one or more user inputs identifying a data set and providing a first user request to perform a first task based on at least a portion of the data set, wherein the data set is defined by an ontology;
using a large language model ("LLM") to identify, based at least on the first user request and the ontology, a first machine learning ("ML") model type from a plurality of ML model types;
using the LLM to identify, based at least on the first user request, the ontology, and the first ML model type, a first portion of the data set to be used to perform the first task;
using the LLM to generate, based at least on the first user request, the first portion of the data set, and the first ML model type, a first ML model training configuration; and
executing the first ML model training configuration to train a first custom ML model, of the first ML model type, to perform the first task.

2. The computerized method of Claim 1, further comprising:
executing the first custom ML model to generate a first processing result to fulfill the first user request, and optionally, further comprising:
generating a visual representation of the first processing result; and
providing, via the user interface, the visual representation of the first processing result.

3. The computerized method of any preceding claim, wherein using the LLM to identify the first ML model type comprises:
generating, based on the first user request and the ontology, a first prompt for the LLM;
transmitting the first prompt to the LLM;
receiving a first output from the LLM in response to the first prompt, wherein the first output identifies the first ML model type; and
parsing, from the first output, the first ML model type.

4. The computerized method any preceding claim, wherein using the LLM to identify the first portion of the data set comprises:
generating, based on the first user request, the ontology, the data set, and the first ML model type, a second prompt for the LLM;
transmitting the second prompt to the LLM;
receiving a second output from the LLM in response to the second prompt, wherein the second output identifies the first portion of the data set to be used to perform the first task; and
parsing, from the second output, the first portion of the data set.

5. The computerized method of any preceding claim, wherein using the LLM to generate the first ML model training configuration comprises:
generating, based on the first user request, the first portion of the data set, and the first ML model type, a third prompt for the LLM;
transmitting the third prompt to the LLM;
receiving a third output from the LLM in response to the third prompt, wherein the third output comprises the first ML model training configuration; and
parsing, from the third output, the first ML model training configuration.

6. The computerized method of any preceding claim 1, wherein the first ML model training configuration uses the first portion of the data set rather than remaining portions of the data set to train the first custom ML model.

7. The computerized method of any preceding claim, further comprising:
providing, via the user interface, the first portion of the data set;
receiving a user input confirming that the first portion of the data set is relevant to perform the first task; and
in response to receiving the user input confirming that the first portion of the data set is relevant to perform the first task, using the LLM to generate the first ML model training configuration based at least on the first user request, the first portion of the data set, and the first ML model type.

8. The computerized method of any of claims 1 to 6, further comprising:
automatically verifying that the first portion of the data set is relevant to perform the first task; and
in response to automatically verifying that the first portion of the data set is relevant to perform the first task, using the LLM to generate the first ML model training configuration based at least on the first user request, the first portion of the data set, and the first ML model type.

9. The computerized method of any preceding claim, further comprising:
storing the first custom ML model as a ML model data object defined by the ontology,
wherein the ML model data object is associated with at least the first user request, the first portion of the data set, and a timestamp indicating when the first custom ML model is trained, and optionally, further comprising:
receiving, via the user interface, a second user-identification of the data set and a second user request to perform a second task based on the data set;
determining, based at least on the second user request, the ML model data object, and the ontology, that the first custom ML model can be used to fulfill the second user request; and
in response to determining that the first custom ML model can be used to fulfill the second user request, executing the first custom ML model to generate a second processing result to fulfill the second user request.

10. The computerized method of any preceding claim, further comprising:
using the LLM to identify, based on the first user request, the ontology, and a first instruction to avoid identifying the first ML model type, a second ML model type;
using the LLM to generate a second ML model training configuration based at least on the first user request, the first portion of the data set, and the second ML model type; and
executing the second ML model training configuration to train a second custom ML model to perform the first task.

11. The computerized method of any preceding claim, further comprising:
using the LLM to identify, based on the first user request, the ontology, the first ML model type, and a first instruction to avoid identifying the first portion of the data set, a second portion of the data set to be used to perform the first task;
using the LLM to generate a second ML model training configuration based at least on the first user request, the second portion of the data set, and the first ML model type; and
executing the second ML model training configuration to train a second custom ML model to perform the first task, and optionally, further comprising:
determining that the first custom ML model is superior to perform the first task as compared to the second custom ML model; and
in response to determining that the first custom ML model is superior to perform the first task as compared to the second custom ML model, selecting or storing the first custom ML model rather than the second custom ML model to perform the first task.

12. The computerized method of Claim 1, further comprising:
evaluating the first portion of the data set with reference to one or more criteria; and
either:
responsive to determining that the first portion of the data set does not satisfy the one or more criteria, automatically updating the first portion of the data set for the LLM to generate the first ML model training configuration, or
responsive to determining that the first portion of the data set does not satisfy the one or more criteria, using the LLM to identify, based on the first user request, the ontology, the first ML model type, and a second instruction to avoid identifying the first portion of the data set, a third portion of the data set to be used to perform the first task.

13. The computerized method of any preceding claim, further comprising:
using the LLM to identify, based on at least the first user request, a type of data relevant to the first task, where the type of data is at least one of: time-series data or tabular data, wherein identifying the first portion of the data set is based on identifying data of the identified type of data.

14. A system comprising:
one or more computer-readable storage mediums having program instructions embodied therewith; and
one or more processors configured to execute the program instructions to cause the system to perform the computerized method of any preceding claim.

15. A computer program product comprising one or more computer-readable storage mediums having program instructions embodied therewith, the program instructions executable by one or more processors to cause the one or more processors to perform the computerized method of any of claims 1 to 13.
